# FASCICULE DE BREVET EUROPEEN

(11) **EP 4 438 471 B1**
(45) Date de publication et mention de la délivrance du brevet: **30.04.2025**
(21) Numéro de dépôt: 24151749.9
(22) Date de dépôt: 15.01.2024
(51) Int. Cl.: B64C 25/00, B64D 45/00, G01L 5/00

(54) **PROCÉDÉ ET SYSTÈME DE DÉTECTION D'UN ATTERRISSAGE DUR**
VERFAHREN UND SYSTEM ZUR ERKENNUNG EINER HARTEN LANDUNG
METHOD AND SYSTEM FOR DETECTING HARD LANDING

(30) Priorité: 31.03.2023 FR 2303178
(43) Date de publication de la demande: 02.10.2024
(73) Titulaire: Airbus Helicopters, 13725 Marignane Cedex (FR)
(72) Inventeur: ROCHER, Antonin, 13820 ENSUES-LA-REDONNE (FR); BECQUET, Roland, 13590 MEYREUIL (FR)
(74) Mandataire: GPI Brevets

(56) Documents cités:
- EP-A1- 4 015 373
- US-A- 3 712 122
- US-A1- 2011 231 037
- US-B2- 6 676 075

## Description

La présente invention concerne un procédé et un système de détection d'un atterrissage dur, ainsi qu'un ensemble comprenant un tel système et un aéronef.

Les règlements de certification des aéronefs définissent un type d'atterrissage qualifié de « dur » ou encore dénommé « hard landing » en langue anglaise, selon la terminologie de l'homme du métier. Suite à un atterrissage dur, l'aéronef doit être inspecté pour réparer d'éventuelles détériorations résultant de l'atterrissage.

Usuellement, un atterrissage dur peut être signalé par un pilote. Le ressenti d'un pilote peut néanmoins s'avérer inexact. Dès lors divers systèmes sont connus pour détecter un atterrissage dur.

Le document US 7 589 645 B2 décrit un système d'aéronef comprenant un moyen de mesure et de stockage de données provenant de capteurs d'accélération et de gyroscopes. Le système comporte en outre des moyens pour comparer des données stockées à au moins un seuil. Si le seuil est dépassé, les données reçues des capteurs d'accélération et des gyroscopes doivent être analysées pour déterminer si un atterrissage dur a eu lieu.

Selon une autre technique, un aéronef peut comporter un train d'atterrissage muni d'un fusible mécanique configuré pour rompre lors d'un atterrissage dur.

Le document US 6 676 075 B2 décrit une méthode pour détecter un atterrissage dur à partir de signaux analogiques émis par des transducteurs disposés sur des éléments d'un aéronef. Des transducteurs peuvent être disposés sur des boulons reliant un train d'atterrissage à une structure porteuse de l'aéronef, un panneau d'aile, ou une poutre de train d'atterrissage.

Le document US 3 712 122 A décrit aussi des transducteurs disposés sur des trains d'atterrissages.

Le document US 5 214 586 décrit un indicateur d'atterrissage dur générant une alerte lorsque la pression d'un train d'atterrissage dépasse une limite.

Le document CA 2 620 188 A1 décrit un train d'atterrissage ayant une première paire de roues inférieures et une deuxième paire de roues supérieures. Un dispositif de surveillance comprend un capteur de pression afin de mesurer la pression d'un fluide hydraulique dans une jambe principale du train d'atterrissage. De plus, le dispositif de surveillance comprend un premier capteur pour capter et signaler que le train d'atterrissage est baissé, un deuxième capteur pour détecter, capter et signaler le début d'un premier mode de fonctionnement durant lequel la première paire de roues inférieures touche le sol, et un troisième capteur pour détecter et signaler le début d'un deuxième mode de fonctionnement lors duquel la deuxième paire de roues supérieures touche aussi le sol.

Le document IN 2013CH02074 A suggère de détecter la survenue d'un atterrissage en surveillant une pression dans un amortisseur d'un train d'atterrissage.

La surveillance d'un paramètre et la comparaison de sa valeur à un seuil est intéressante. Toutefois, la simple comparaison de la valeur d'un paramètre à un seuil peut être approximative. Par exemple, la pression d'un fluide dans un amortisseur d'un train d'atterrissage peut être comparée à un seuil. Cependant, cette pression peut varier de multiples manières en fonction des conditions d'atterrissages, notamment en fonction de l'assiette de l'aéronef, de la vitesse verticale de l'aéronef, ou encore des facteurs de charge subis.

Le document FR 2 931 553 B1 décrit un procédé d'aide à la détection d'un atterrissage dur d'un aéronef comprenant la détermination d'un instant d'impact d'un aéronef sur une piste d'atterrissage à partir des valeurs de paramètres mesurés. De plus, ce procédé comporte le calcul d'au moins une donnée relative à un composant structurel de l'aéronef à l'aide d'au moins un réseau de neurones recevant en entrée des valeurs estimées desdits paramètres à l'instant d'impact. Cette donnée est ensuite comparée à une valeur de seuil.

L'article présent sur internet à l'adresse https://www.atr-aircraft.com/fr/presspost/atr-et-safran-developpent-smart-lander-un-service-revolutionnaire-danalyse-des-atterrissages-durs le 9 janvier 2023 fait référence à un service de diagnostic de trains d'atterrissage reposant sur une intelligence artificielle alimentée par des simulations d'atterrissages durs.

Les documents EP 4 015 373 A1, US 6 676 075 B2, US 3 712 122 A, et US 2011/231037 A sont aussi connus.

EP 4 015 373 A1 divulgue un système de détection d'un atterrissage dur pour détecter la survenue d'un atterrissage dur lors d'une phase d'atterrissage effectuée par un aéronef, l'aéronef étant muni d'un train d'atterrissage comprenant un organe de contact venant en contact avec le sol lors d'un atterrissage et au moins deux connecteurs connectés à une structure de l'aéronef, ledit train d'atterrissage comprenant un amortisseur contenant au moins un fluide, le système de détection comprenant :
un controleur, un senseur de température, un senseur de pression d'une pression d'amortisseur dudit fluide et un senseur de données de fonctionnement de l'aéronef.

La présente invention a alors pour objet de proposer un procédé alternatif pour déterminer si un aéronef a effectué un atterrissage dur.

L'invention vise un procédé de détection d'un atterrissage dur pour détecter la survenue d'un atterrissage dur lors d'une phase d'atterrissage effectuée par un aéronef, l'aéronef étant muni d'au moins un train d'atterrissage comprenant au moins un organe de contact venant en contact avec le sol lors d'un atterrissage et au moins deux connecteurs connectés à une structure de l'aéronef, ledit train d'atterrissage comprenant un amortisseur contenant au moins un fluide. Le fluide peut être un liquide, tel que de l'huile. Le fluide peut être sujet à un phénomène de laminage lors d'un atterrissage.

Le procédé de détection d'un atterrissage dur comporte, une réalisation de cycles de surveillance successifs, chaque cycle de surveillance comprenant les étapes suivantes :
- avec un contrôleur détermination de trois composantes sol d'une force de réaction du sol à une interface entre le sol et l'organe de contact et selon respectivement trois axes de référence distincts et non coplanaires, et détermination pour chaque connecteur de trois composantes d'attache d'une force exercée sur ce connecteur respectivement selon lesdits trois axes de référence,
- détermination avec le contrôleur qu'un point d'effort sol défini par les trois composantes sol est dans ou en dehors d'un volume sol délimité par une enveloppe de dimensionnement sol dans un diagramme sol à trois dimensions, et pour chaque connecteur qu'un point d'effort d'attache défini par les trois composantes d'attache correspondantes est dans ou en dehors d'une volume d'attache délimité par une enveloppe de dimensionnement d'attache dans un diagramme d'attache à trois dimensions propre,
- détermination, à chaque cycle de surveillance ou à l'issue des cycles de surveillance, de la présence d'un atterrissage dur quand au moins le point d'effort sol est en dehors de l'enveloppe de dimensionnement sol ou au moins un point d'effort d'attache est en dehors de l'enveloppe de dimensionnement d'attache correspondante.

Le terme « connecteur » peut désigner une articulation en tant que telle, par exemple une articulation à pivot ou à rotule. Le terme « connecteur » peut aussi désigner une liaison d'une articulation. Dans ce dernier cas, une articulation à pivot peut être formée par deux connecteurs de type liaison à rotule.

L'expression « pour chaque connecteur qu'un point d'effort d'attache défini par les trois composantes d'attache correspondantes est dans ou en dehors d'une volume d'attache délimité par une enveloppe de dimensionnement d'attache dans un diagramme d'attache à trois dimensions propre » signifie que chaque connecteur est associé à un diagramme d'attache à trois dimensions et à une enveloppe de dimensionnement d'attache qui lui sont spécifiques.

En effet, des essais, calculs et simulations peuvent être entrepris afin de certifier l'aéronef. Durant ces essais et simulations, un constructeur peut déterminer pour chaque interface de chaque train d'atterrissage les forces subies lors de divers d'atterrissages, et notamment lors de divers atterrissages à la limite d'un atterrissage dur. Ces essais et simulations peuvent être réalisés en faisant varier les valeurs de divers paramètres influant le type de l'atterrissage, tels que la vitesse verticale ou encore l'assiette de l'aéronef par exemple. A l'aide de ces essais et simulations, un constructeur peut établir les diverses enveloppes de dimensionnement délimitant les points d'efforts obtenus lors de simulations et tests d'atterrissage normaux. Ainsi, une enveloppe de dimensionnement sol délimite les points d'efforts sol n'impliquant pas une action de maintenance pour cause d'atterrissage dur. De même, pour chaque connecteur, une enveloppe de dimensionnement d'attache propre à ce connecteur délimite les points d'efforts d'attache n'impliquant pas une action de maintenance.

Dès lors, le contrôleur est configuré pour estimer les forces subies par le train d'atterrissage aux interfaces avec le sol et une structure de l'aéronef selon trois axes de référence, par exemple de l'aéronef. Déterminer les forces subies dans un référentiel de l'aéronef permet de faire aisément le lien avec les essais et simulations de certification. Les composantes sol et d'attache de ces forces permettent de déterminer précisément si l'atterrissage doit être qualifié d'atterrissage dur ou non, et si des actions de maintenance doivent être entreprises.

Pour chaque phase d'atterrissage, ce procédé permet ainsi de déterminer précisément les composantes des forces subies aux interfaces lors d'une pluralité de cycles de surveillance, et non pas uniquement au moment du touché de l'aéronef par exemple. Les cycles de surveillance peuvent être réalisés en temps réel ou après l'atterrissage. A chaque cycle de surveillance, le procédé détermine si au moins un point d'effort sol ou d'attache est en dehors de l'enveloppe de dimensionnement associée. Dans l'affirmative, l'atterrissage étudié est un atterrissage dur.

Ce procédé de détection d'un atterrissage dur ne se contente pas d'une simple comparaison à un instant particulier, par exemple d'une comparaison d'une pression à un seuil à un instant particulier. Une telle comparaison peut nécessiter d'utiliser un seuil relativement bas en raison des conditions d'atterrissage très variables subies. A l'inverse, à chaque cycle de surveillance, le contrôleur de l'invention détermine les coordonnées du point d'effort sol et des points d'efforts d'attache pour évaluer si ces points d'effort sol et d'attache sont dans, ou en dehors, des enveloppes de dimensionnement respectives. Ce procédé permet donc de prendre en compte l'évolution des forces subies au niveau des interfaces, et par suite la dynamique de l'atterrissage.

Par ailleurs, ce procédé de détection d'un atterrissage dur peut être mis en œuvre à l'aide de senseurs relativement simples déjà en place sur de nombreux trains d'atterrissage et à bord de nombreux aéronefs.

Le procédé de détection d'un atterrissage dur peut de plus comprendre une ou des caractéristiques qui suivent, prises seules ou en combinaison.

Selon une possibilité, le procédé de détection d'un atterrissage dur peut comporter une détermination avec le contrôleur que le point d'effort sol a pour coordonnées les trois composantes sol dans le diagramme sol à trois dimensions, et pour chaque connecteur une détermination avec le contrôleur que le point d'effort d'attache associé a pour coordonnées les trois composantes d'attache associées dans le diagramme d'attache à trois dimensions propre au connecteur concerné.

Selon une possibilité compatible avec les précédentes, le procédé de détection d'un atterrissage dur peut comporter une génération d'une alerte de maintenance avec un alerteur suite à une détermination de la présence d'un atterrissage dur ou une génération d'une alerte de normalité avec l'alerteur lorsqu'aucun point d'effort sol est en dehors de l'enveloppe de dimensionnement sol et qu'aucun point d'effort d'attache est en dehors de l'enveloppe de dimensionnement d'attache correspondante.

Ainsi, un pilote ou un opérateur peut être prévenu qu'une action de maintenance doit le cas échéant être entreprise.

Selon une possibilité compatible avec les précédentes, les enveloppes de dimensionnement sol et d'attache peuvent être mémorisées dans une mémoire du contrôleur.

Selon une possibilité compatible avec les précédentes, les trois axes de référence peuvent être un axe de roulis de l'aéronef, un axe de tangage de l'aéronef et un axe de lacet de l'aéronef.

Les composantes sol et d'attache sont ainsi définies dans un référentiel de l'aéronef.

Selon une possibilité compatible avec les précédentes, le procédé de détection d'un atterrissage dur peut comporter des mesures successives, en vol et avec un senseur de pression, d'une pression d'amortisseur dudit fluide, ledit contrôleur étant configuré pour estimer que ladite phase d'atterrissage débute lorsqu'une différence relative entre deux mesures successives de ladite pression d'amortisseur dépasse un seuil de déclenchement.

Par exemple, lorsque la pression d'amortisseur augmente d'au moins 5 % entre deux mesures successives de pression d'amortisseur, le contrôleur peut être configuré pour en déduire que la phase d'atterrissage à étudier débute.

Selon un autre exemple, un commutateur peut être activé suite au touché de l'aéronef avec le sol, ce commutateur émettant un signal porteur d'une information signalant ce touché.

Selon une possibilité compatible avec les précédentes, le procédé de détection d'un atterrissage dur peut comporter une mesure avec un senseur de pression d'une pression d'amortisseur dudit fluide lors de la phase d'atterrissage, ledit contrôleur étant configuré pour estimer que ladite phase d'atterrissage est terminée lorsqu'au moins une des conditions suivantes est vérifiée :
- chaque train d'atterrissage dudit au moins un train d'atterrissage repose sur le sol, et
- ladite pression d'amortisseur pour chaque train d'atterrissage dudit au moins un train d'atterrissage est supérieure à un seuil de test mémorisé ou calculé pendant une durée de référence.

Le contrôleur peut considérer qu'un train d'atterrissage repose sur le sol tant qu'un état stabilisé est détecté, et par exemple tant que la valeur absolue d'une différence relative (exprimé en pourcentage par exemple) entre deux mesures successives de ladite pression d'amortisseur de ce train d'atterrissage est inférieure à un seuil mémorisé.

Le seuil de test peut être mémorisé. Alternativement, le seuil de test peut être calculé. Par exemple, le seuil de test à appliquer à un train d'atterrissage peut correspondre à un multiple de la pression d'amortisseur mesurée en vol avant le touché du train d'atterrissage. Le seuil de test peut être calculé en fonction de la température ou d'autres paramètres.

Selon une possibilité compatible avec les précédentes, l'enveloppe de dimensionnement sol peut comporter des points dimensionnant sol et chaque enveloppe de dimensionnement d'attache peut comporter des points dimensionnant d'attache, chaque point dimensionnant sol représentant une force maximale subie à une interface entre l'organe de contact et le sol lors d'un cas d'atterrissage limite, et pour chaque connecteur chaque point dimensionnant d'attache représentant une force maximale subie par le connecteur concerné lors du cas d'atterrissage limite.

Un constructeur peut réaliser ou simuler de multiples atterrissages dit normaux, à savoir qui n'impliquent pas de réaliser des actions de maintenance suite à l'atterrissage. Les points dimensionnant situés à la périphérie du nuage de points obtenu sont reliés pour obtenir une enveloppe de dimensionnement.

Selon une possibilité compatible avec les précédentes, lesdites déterminations avec un contrôleur de trois composantes sol et de trois composantes d'attache par connecteur peuvent comporter les étapes suivantes :
- mesure lors du cycle de surveillance courant avec un senseur de pression d'une pression d'amortisseur dudit fluide,
- mesure, pendant ou en dehors de la phase d'atterrissage, avec un senseur de température d'une température dans ou en dehors dudit amortisseur,
- mesure lors du cycle de surveillance courant avec un senseur de données de fonctionnement d'une ou plusieurs données de fonctionnement dudit aéronef,
- détermination, avec le contrôleur, à partir d'un modèle d'efforts prenant en compte ladite température et ladite pression d'amortisseur ainsi que la ou les données de fonctionnement des trois composantes sol et des trois composantes d'attache par connecteur.

La température peut être mesurée avec un senseur de température usuel mesurant une température du fluide dans l'amortisseur. Selon un autre exemple, la température peut être mesurée en dehors de l'amortisseur.

L'expression « pendant ou en dehors de la phase d'atterrissage » signifie qu'au moins une valeur de température est mémorisée, par exemple la valeur atteinte avant ou à l'initialisation de la phase d'atterrissage, à la fin de la phase d'atterrissage ou autres. La température peut être considérée sensiblement constante lors de la phase d'atterrissage. Dans ce cas, l'expression « prenant en compte ladite température » signifie que le modèle d'efforts prend en compte la valeur mémorisée.

Alternativement, plusieurs valeurs successives de la température peuvent être mémorisées, l'expression « prenant en compte ladite température » signifie alors que le modèle d'efforts prend en compte la valeur de la température mesurée lors du cycle de surveillance courant.

L'estimateur d'efforts permet d'évaluer plus finement la nature de l'atterrissage à l'aide non pas d'une simple valeur de pression mais de l'évolution de cette pression durant la phase d'atterrissage, ainsi qu'avec une ou des valeurs d'une ou plusieurs données de fonctionnement. L'expression « donnée de fonctionnement » désigne une donnée influençant le comportement de l'aéronef voire du ou des trains d'atterrissage, et notamment une donnée d'inertie voire une donnée ayant un impact sur l'inertie de l'aéronef.

L'utilisation de ces paramètres permet de prendre en considération le comportement dynamique du train d'atterrissage pour déterminer le type d'atterrissage.

Indépendamment de la manière de traiter la température, à chaque cycle de surveillance, la pression du fluide d'amortisseur et une ou des données de fonctionnement sont mesurées et utilisées par le contrôleur.

Le modèle d'efforts peut comprendre par exemple une intelligence artificielle, ou une ou plusieurs lois mémorisées. Le modèle d'efforts peut être construit à partir de tests, calculs et/ou de simulations. Ces tests, calculs et/ou simulations peuvent couvrir l'ensemble du domaine de vol certifié et défini par un ou des règlements de certification. En particulier des simulations peuvent simuler divers atterrissages se produisant avec des valeurs multiples d'un ou de plusieurs paramètres. Des simulations peuvent par exemple être réalisées pour des cas d'atterrissages n'ayant pas été testés lors d'essais dédiés. Chaque cas d'atterrissage testé ou simulé peut être défini par au moins un paramètre appartenant à la liste suivante : vitesse verticale, vitesse longitudinale, vitesse latérale, masse de l'aéronef, température ambiante, angle d'assiette en roulis, angle d'assiette en tangage, portance, vitesse angulaire autour d'un axe de roulis ou de tangage ou de lacet de l'aéronef. Une granularité plus fine peut être utilisée pour les cas opérationnels les plus fréquents, ou les cas les plus sévères, pour améliorer la précision du modèle d'efforts.

Dès lors, le contrôleur applique le modèle d'efforts pour estimer les composantes sol et d'attache à chaque cycle de surveillance. Ce procédé ne nécessite donc pas l'utilisation de capteurs d'efforts dédiés.

Selon une possibilité compatible avec les précédentes, la ou les données de fonctionnement peuvent être comprises dans une liste étendue comprenant : un angle de roulis de l'aéronef, un angle de tangage de l'aéronef, un angle de lacet de l'aéronef, une vitesse angulaire en roulis de l'aéronef, une vitesse angulaire en tangage de l'aéronef, une vitesse angulaire en lacet de l'aéronef, une accélération longitudinale selon un axe de roulis de l'aéronef, une accélération latérale selon un axe de tangage de l'aéronef, une accélération verticale selon un axe de lacet, une masse de l'aéronef, une portance de l'aéronef telle que par exemple une portance exercée par un rotor, une position d'une commande de pas collectif d'un rotor de l'aéronef, une position d'une commande de pas cyclique d'un rotor de l'aéronef, une position du centre de gravité de l'aéronef, une pression de gonflage d'un pneu dudit train d'atterrissage, une position d'un composant dudit train d'atterrissage, un angle de pas collectif de pales d'un rotor de l'aéronef, un angle de plateau cyclique d'un rotor de l'aéronef.

Selon une possibilité compatible avec les précédentes, ladite détermination à partir d'un modèle d'efforts des trois composantes sol et des trois composantes d'attache par connecteur peut comporter : (a) une détermination, avec un module de mouvement du modèle d'efforts appliqué par le contrôleur, d'une longueur dudit amortisseur à partir de ladite pression d'amortisseur ainsi que de ladite température, et (b) une détermination, avec un module d'efforts du modèle d'efforts, des composantes sol à partir de ladite longueur ainsi que de ladite pression d'amortisseur et d'au moins une dite donnée de fonctionnement, et (c) une détermination, avec un module de transformation du modèle d'efforts, des composantes d'attache à partir des composantes sol.

Le module d'efforts et/ou le module de mouvement et/ou le module de transformation peuvent chacun comprendre une intelligence artificielle, telle qu'un réseau de neurones par exemple, au moins une loi mathématique ou autres.

Le module de mouvement permet de déterminer la course de l'amortisseur, à savoir sa longueur entre deux points de référence à chaque cycle de surveillance. Cette course permet d'estimer la forme du train d'atterrissage à chaque cycle de surveillance. Cette forme associée à la pression d'amortisseur du fluide dans l'amortisseur et à la ou aux données de fonctionnement permet d'estimer les composantes sol. A partir des composantes sol, la forme du train d'atterrissage permet de déterminer les composantes d'attache.

Selon une possibilité compatible avec les précédentes, chaque enveloppe de dimensionnement sol et d'attache comprenant des points dimensionnant reliés par des surfaces, un point d'effort sol ou un point d'effort d'attache situé en dehors d'une enveloppe de dimensionnement correspondante étant un point critique, chaque point dimensionnant étant associé à au moins un composant dimensionnant du train d'atterrissage, suite à la détermination de la présence d'un atterrissage dur, ledit procédé de détection d'un atterrissage dur peut comporter pour chaque point critique : (i) détermination d'un vecteur reliant le point critique et une origine du diagramme sol ou d'attache associé, (ii) détermination d'une dite surface de ladite enveloppe de dimensionnement correspondante traversée par le vecteur, (iii) affichage d'une alerte signalant que chaque composant associé à un point dimensionnant formant un sommet de la surface traversée par le vecteur est une pièce mécanique à inspecter.

Dès lors, le procédé permet non seulement de détecter un atterrissage dur mais aussi de signaler les composants à inspecter en priorité.

Selon une possibilité compatible avec les précédentes, chaque enveloppe de dimensionnement sol et d'attache comprenant des points dimensionnant reliés par des surfaces, un point d'effort sol ou un point d'effort d'attache situé à une distance prédéterminée de l'enveloppe de dimensionnement correspondante étant un point à la marge, lorsque le point d'effort sol est dans l'enveloppe de dimensionnement sol et tous les points d'efforts d'attache sont dans l'enveloppe de dimensionnement d'attache correspondante, ledit procédé de détection d'un atterrissage dur peut comporter pour chaque point à la marge : (i) détermination d'une demi-droite partant d'une origine du diagramme sol ou d'attache associé et passant par le point à la marge, (ii) détermination d'une dite surface traversée par la demi-droite, (iii) affichage d'une alerte signalant que chaque composant associé à un point dimensionnant formant un sommet de la surface traversée par la demi-droite est une pièce mécanique à inspecter.

Dès lors, si l'atterrissage n'est pas considéré comme étant un atterrissage dur mais comporte un point d'effort à proximité de l'enveloppe de dimensionnement associé, le procédé permet de signaler les composants à éventuellement inspecter par sécurité.

Outre un procédé, l'invention vise un système de détection d'un atterrissage dur pour détecter la survenue d'un atterrissage dur lors d'une phase d'atterrissage effectuée par un aéronef, l'aéronef étant muni d'un train d'atterrissage comprenant un organe de contact venant en contact avec le sol lors d'un atterrissage et au moins deux connecteurs connectés à une structure de l'aéronef, ledit train d'atterrissage comprenant un amortisseur contenant un fluide.

Ce système de détection d'un atterrissage dur est configuré pour appliquer le procédé de détection d'un atterrissage dur.

Ainsi, le système de détection d'un atterrissage dur comprend un contrôleur, agencé ou non dans l'aéronef. De même, le système de détection d'un atterrissage dur peut comprendre un alerteur en communication avec le contrôleur, l'alerteur étant agencé ou non dans l'aéronef, pour générer des alertes sonores, visuelles ou haptiques, voire pour afficher des messages.

Par ailleurs, le système de détection d'un atterrissage dur peut comprendre divers senseurs, et comprend en particulier un senseur de température, un senseur de pression, et un senseur de données de fonctionnement.

L'invention vise aussi un ensemble ayant un aéronef muni d'un train d'atterrissage comprenant un organe de contact venant en contact avec le sol lors d'un atterrissage et au moins deux connecteurs connectés à une structure de l'aéronef, ledit train d'atterrissage comprenant un amortisseur contenant au moins un fluide. Cet ensemble est muni d'un système de détection d'un atterrissage dur, ledit système de détection d'un atterrissage dur étant au moins partiellement agencé dans ledit aéronef.

L'invention et ses avantages apparaîtront avec plus de détails dans le cadre de la description qui suit avec des exemples donnés à titre illustratif en référence aux figures annexées qui représentent :
- la figure 1, un schéma illustrant un système de détection d'un atterrissage dur selon l'invention pour un aéronef,
- la figure 2, un schéma illustrant un procédé de détection d'un atterrissage dur,
- la figure 3, un schéma illustrant un modèle d'efforts selon l'invention,
- la figure 4, un diagramme sol contenant un point d'effort sol présent dans une enveloppe de dimensionnement sol,
- la figure 5, un diagramme d'attache contenant un point d'effort d'attache présent dans une enveloppe de dimensionnement d'attache,
- la figure 6, un diagramme sol contenant un point d'effort sol présent en dehors d'une enveloppe de dimensionnement sol, et
- la figure 7, un diagramme sol contenant un point d'effort sol présent dans une enveloppe de dimensionnement sol et représentant un point à la marge.

Les éléments présents dans plusieurs figures distinctes sont affectés d'une seule et même référence.

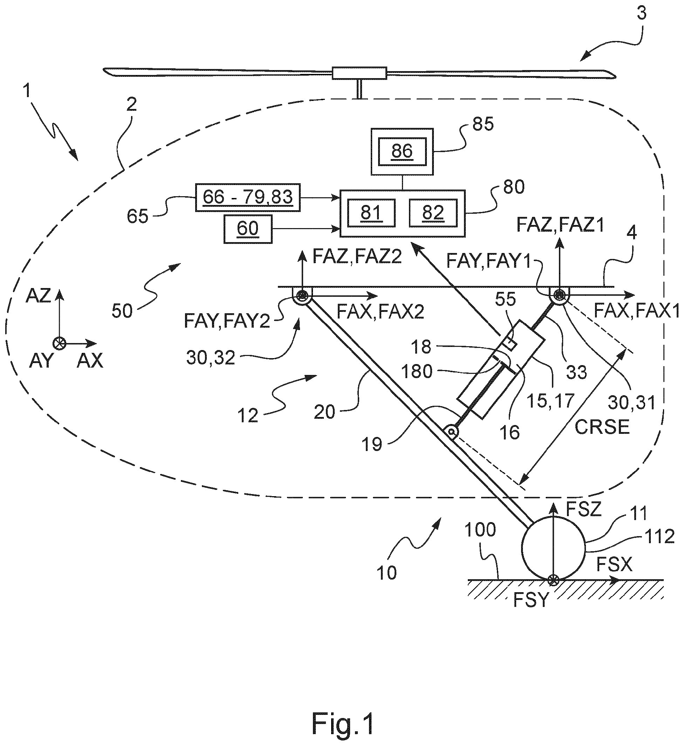

Trois directions AX, AY et AZ orthogonales les unes par rapport aux autres sont représentées sur la figure 1. La direction AX représente un axe de roulis de l'aéronef illustré. La direction AY représente un axe de tangage de l'aéronef illustré et la direction AZ représente un axe de lacet de l'aéronef illustré.

La figure 1 présente ainsi un aéronef 1 muni d'une cellule 2. Cette cellule 2 peut porter au moins un rotor de sustentation 3 participant notamment à la sustentation de l'aéronef 1. Ainsi, l'aéronef 1 peut être un giravion.

Cet aéronef 1 comporte au moins un train d'atterrissage 10. Le train d'atterrissage 10 est muni d'un ou plusieurs organes de contact 11 destinés à être en contact avec le sol 100 lorsque l'aéronef 1 est posé. Par exemple, un organe de contact 11 peut comprendre une roue 112, un patin, un ski...

Par ailleurs, le train d'atterrissage 10 comporte un assemblage 12 portant le ou les organes de contact 11 et comprenant au moins deux connecteurs 30 connectés à une structure porteuse 4 de l'aéronef 1. La référence 30 désigne n'importe quel connecteur, les références 31, 32 désignant des connecteurs particuliers si besoin. La structure porteuse 4 peut comprendre un même élément connecté aux connecteurs 30 selon l'exemple illustré, ou plusieurs éléments distincts.

En outre, l'assemblage 12 comprend au moins un amortisseur 15 contenant au moins un fluide 16. Le fluide 16 est par exemple un liquide, et en particulier éventuellement de l'huile. L'amortisseur 15 peut comprendre au moins un orifice de laminage 180, le fluide étant apte à traverser cet orifice de laminage. De plus, l'assemblage 12 peut comprendre un ou plusieurs organes 20 de guidage, de soutien voire de rétraction de l'organe de contact 11.

La figure 1 présente un exemple de train d'atterrissage 10 pour illustrer l'invention. Dans ce cas, l'amortisseur 15 comprend un corps 17 logeant un piston 18 solidaire d'une tige de puissance 19, la tige de puissance 19 sortant du corps 17 pour être articulée à une jambe de train 20. L'amortisseur 15 est articulé à la structure 4 par un premier connecteur 31. Le premier connecteur 31 comprend par exemple une tige 33 solidaire du corps 17, et une liaison pivot articulant la tige 33 à la structure porteuse 4. Par ailleurs, la jambe de train 20 porte une roue 112. La jambe de train 20 est articulée par un deuxième connecteur 32 à la structure 4. Le deuxième connecteur 32 peut comprendre un pivot conférant, à la jambe de train 20, une liberté de mouvement uniquement en rotation par rapport à la structure 4 autour d'un axe.

Indépendamment de la manière de réaliser le train d'atterrissage 10, ce train d'atterrissage 10 comprend donc au moins un organe de contact 11, un amortisseur 12 logeant un fluide 16, et au moins deux connecteurs 30 articulés à une structure porteuse 4 de l'aéronef 1.

Par ailleurs, la figure 1 illustre un système 50 de détection d'un atterrissage dur configuré pour déterminer automatiquement si un atterrissage est ou n'est pas un atterrissage dur, pendant l'atterrissage ou après l'atterrissage. Ce système 50 de détection d'un atterrissage dur peut être agencé entièrement ou partiellement au sein de l'aéronef 1.

Ce système 50 de détection d'un atterrissage dur comprend un ou des senseurs suivants. Le terme « senseur » désigne un capteur capable de mesurer directement le paramètre en question mais aussi un système pouvant comprendre un ou plusieurs capteurs voire au moins un moyen de traitement du signal permettant de fournir une estimation du paramètre à partir de la ou des mesures fournies par ces capteurs physiques.

Ainsi, le système 50 de détection d'un atterrissage dur peut comprendre un ou des senseurs d'efforts 83 usuels.

Alternativement ou de manière complémentaire, le système 50 de détection d'un atterrissage dur peut comprendre un ou des senseurs pour notamment évaluer les forces subies aux interfaces de chaque train d'atterrissage. Ces senseurs peuvent éventuellement être déjà présents sur un aéronef 1.

Ainsi, le système 50 de détection d'un atterrissage dur peut comprendre, pour chaque train d'atterrissage, un senseur de pression 55 mesurant une pression d'amortisseur dudit fluide 16.

Le système 50 de détection d'un atterrissage dur peut comprendre un senseur de température 60 mesurant une température dans ou en dehors dudit amortisseur 15. Le senseur de température 60 peut être agencé sur l'amortisseur 15, voire peut mesurer la température du fluide 16, ou peut être à toute autre position dans ou en dehors de la cellule 2.

Par ailleurs, le système 50 de détection d'un atterrissage dur peut comprendre un senseur de données de fonctionnement 65 mesurant au moins une donnée de fonctionnement de l'aéronef 1. L'expression « donnée de fonctionnement » est à interpréter selon un sens large et couvre une donnée influençant le comportement de l'aéronef voire des trains d'atterrissage, telle qu'une donnée d'inertie ou une donnée ayant un impact sur l'inertie de l'aéronef. Une telle donnée de fonctionnement peut être comprise dans une liste étendue comprenant : un angle de roulis de l'aéronef 1, un angle de tangage de l'aéronef 1, un angle de lacet de l'aéronef 1, une vitesse angulaire en roulis de l'aéronef 1, une vitesse angulaire en tangage de l'aéronef 1, une vitesse angulaire en lacet de l'aéronef 1, une accélération longitudinale selon un axe de roulis de l'aéronef 1, une accélération latérale selon un axe de tangage de l'aéronef 1, une accélération verticale selon un axe de lacet 1, une masse de l'aéronef 1, une portance de l'aéronef 1, une position d'une commande de pas collectif du rotor 3 de l'aéronef 1, une position d'une commande de pas cyclique du rotor 3 de l'aéronef 1, une position du centre de gravité de l'aéronef 1, une pression de gonflage d'un pneumatique de la roue 112 du train d'atterrissage 10, une position d'un composant dudit train d'atterrissage 10, un angle de pas collectif de pales d'un rotor 3 de l'aéronef 1, un angle de plateau cyclique d'un rotor de l'aéronef.

Ainsi, le senseur de données de fonctionnement 65 peut comprendre au moins un des senseurs suivants : un senseur de roulis 66 mesurant un angle de roulis de l'aéronef 1, un senseur de tangage 67 mesurant un angle de tangage de l'aéronef 1, un senseur de lacet 68 mesurant un angle de lacet de l'aéronef 1. Par exemple, une centrale inertielle fait office de senseur de roulis 66 et de senseur de tangage 67 et de senseur de lacet 68.

Le senseur de données de fonctionnement 65 peut comprendre au moins un des senseurs suivants : un senseur de vitesse en roulis 69 mesurant une vitesse angulaire en roulis de l'aéronef 1, un senseur de vitesse en tangage 70 mesurant une vitesse angulaire en tangage de l'aéronef 1, un senseur de vitesse en lacet 71 mesurant une vitesse angulaire en lacet de l'aéronef 1. Par exemple, une centrale inertielle peut être utilisée. Un senseur de vitesse peut comprendre un senseur d'accélération et un intégrateur par exemple.

Le senseur de données de fonctionnement 65 peut comprendre au moins un des senseurs suivants : un senseur d'accélération en roulis 72 mesurant une accélération longitudinale selon un axe de roulis de l'aéronef 1, un senseur d'accélération en tangage 73 mesurant une accélération latérale selon un axe de tangage de l'aéronef 1, un senseur d'accélération en lacet 74 mesurant une accélération verticale selon un axe de lacet de l'aéronef 1. Par exemple, ces senseurs peuvent comprendre des accéléromètres.

Le senseur de données de fonctionnement 65 peut comprendre un senseur de masse 75 mesurant une masse de l'aéronef 1. Le senseur de masse peut par exemple comprendre un calculateur calculant une masse de carburant à partir du volume de carburant mesuré à l'aide d'un senseur de volume de carburant , la masse de l'aéronef 1 étant égale à la somme de la masse de carburant, d'une masse à vide et d'une masse de la charge utile portée par exemple.

Le senseur de données de fonctionnement 65 peut comprendre un senseur de portance 76 évaluant une portance de l'aéronef 1. Un tel senseur de portance 76 peut comprendre un senseur d'accélération verticale mesurant une accélération verticale ou un facteur de charge et un calculateur calculant la portance de manière usuelle en fonction de cette accélération verticale.

Le senseur de données de fonctionnement 65 peut comprendre un senseur de pression 77 mesurant une pression de gonflage d'un pneumatique de la roue 112 dudit train d'atterrissage 10.

Le senseur de données de fonctionnement 65 peut comprendre au moins un senseur de position 78 mesurant une position d'un composant dudit train d'atterrissage 10 ou d'une commande de l'aéronef 1.

Le senseur de données de fonctionnement 65 peut comprendre au moins un senseur de pas 79 mesurant un angle de pas collectif de pales d'un rotor 3 de l'aéronef 1.

Eventuellement, le senseur de données de fonctionnement 65 peut comprendre un senseur angulaire 80 mesurant une information relative à un angle du plateau cyclique d'un rotor de l'aéronef, par exemple par rapport à un plan de référence. Par exemple, le plateau cyclique peut être piloté par plusieurs servocommandes. Dès lors, ce senseur angulaire peut comprendre des capteurs mesurant une position d'un organe de chaque servocommande et un calculateur permettant d'en déduire ledit angle du plateau cyclique d'un rotor de l'aéronef.

Par ailleurs, le système 50 de détection d'un atterrissage dur peut comprendre une mémoire 82 mémorisant au moins une valeur de ladite température ainsi que des valeurs successives de la pression d'amortisseur et d'une ou plusieurs données de fonctionnement au moins durant une phase d'atterrissage. Par exemple, la température mesurée à l'initialisation d'une phase d'atterrissage peut être mémorisée.

Par ailleurs, le système 50 de détection d'un atterrissage dur comprend un contrôleur 80. Le contrôleur 80 peut être porté par la cellule 2 ou peut être déporté en dehors de la cellule 2. Le contrôleur 80 comprend au moins une unité de traitement. Une telle unité de traitement peut comprendre par exemple au moins un processeur 81, au moins un moyen de stockage, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

La mémoire 82 précitée peut appartenir au contrôleur 80 selon l'exemple illustré.

Le contrôleur 80 peut être en communication filaire ou non filaire avec le senseur d'efforts, le senseur de pression 55, le senseur de température 60 et le senseur de données de fonctionnement 65, ou éventuellement avec la mémoire 82 précitée.

Le système 50 de détection d'un atterrissage dur peut par ailleurs comprendre un alerteur 85 configuré pour générer une alerte suite à la réception d'un signal émis par le contrôleur 80. L'alerteur 85 permet de fournir une information indiquant au moins si un atterrissage a été un atterrissage dur, voire pour fournir une information signalant une ou des pièces à inspecter. L'alerteur 85 peut, par exemple, comprendre un moyen d'affichage 86, tel qu'un écran, une visière de casque, un collimateur tête haute ou autres.

Indépendamment des exemples de réalisation d'un aéronef 1 et d'un système 50 de détection d'un atterrissage dur donnés précédemment, un tel système 50 de détection d'un atterrissage dur est configuré pour appliquer un procédé de détection d'un atterrissage dur selon l'invention.

Ce procédé de détection d'un atterrissage dur comporte la réalisation de cycles de surveillance PCY successifs lors d'une phase d'analyse. Ces cycles de surveillance PCY successifs peuvent être réalisés durant une phase d'atterrissage PHASATT en tant que telle selon l'exemple illustré, ou à la suite de l'atterrissage à l'aide des données mesurées par les divers senseurs requis et mémorisées notamment lors de cette phase d'atterrissage PHASATT.

Selon une possibilité, le contrôleur 80 peut être configuré lors de la phase d'étude pour estimer quand débute la phase d'atterrissage PHASATT.

Par exemple, le procédé de détection d'un atterrissage dur comporte, pour chaque train d'atterrissage 10, des mesures MESVOL successives avec le senseur de pression. Le contrôleur 80 peut alors être configuré pour estimer que la phase d'atterrissage PHASATT a débuté quand une différence entre deux mesures successives de la pression d'amortisseur P d'un train d'atterrissage dépasse un seuil mémorisé.

En présence d'une phase d'atterrissage, les étapes suivantes sont réalisées, lors de chaque cycle de surveillance PCY, pour chaque train d'atterrissage 10.

Ainsi, chaque cycle de surveillance PCY comprend la détermination STP1 des composantes, selon respectivement trois axes de référence distincts et non coplanaires, d'une force de réaction du sol à une interface entre le sol 100 et l'organe de contact 11. Ces trois axes de référence sont par exemple l'axe de roulis AX, l'axe de tangage AY et l'axe de lacet AZ de l'aéronef 1. Ces composantes sont dénommées « composantes sol FSX, FSY, FSZ » par commodité et sont illustrées sur la figure 1.

De même, chaque cycle de surveillance PCY comprend la détermination STP2, avec le contrôleur 80 et pour chaque connecteur 30, des composantes, selon respectivement les trois axes de référence, d'une force exercée sur ce connecteur 30. Ces composantes sont dénommées « composantes d'attache » et sont illustrées sur la figure 1. De manière générale, ces composantes d'attache sont référencées FAX, FAY, FAZ, les références FAX1, FAY1, FAZ1, FAX2, FAY2, FAZ2 étant utilisées pour désigner des composantes d'attache spécifiques si besoin. Selon l'exemple de la figure 1, le contrôleur 80 est donc configuré pour déterminer trois composantes d'attache FAX1, FAY1, FAZ1 au niveau du premier connecteur 31 et trois composantes d'attache FAX2, FAY2, FAZ2 au niveau du deuxième connecteur 32.

Selon une première possibilité simple, des senseurs d'efforts émettent des signaux de mesure, mémorisés et/ou transmis au contrôleur, ces signaux de mesure étant porteurs des valeurs des diverses composantes sol et d'attache.

Selon une deuxième possibilité, le procédé de détection d'un atterrissage dur peut comporter la mesure STPM1 lors du cycle de surveillance courant avec le senseur de pression 55 de la pression d'amortisseur P du fluide 16 de l'amortisseur 15.

De plus, le procédé de détection d'un atterrissage dur peut comporter la mesure STPM2, pendant ou en dehors de la phase d'atterrissage, avec le senseur de température 60 d'une température T dans ou en dehors de l'amortisseur 15, et la mesure STPM3 lors du cycle de surveillance courant avec le senseur de données de fonctionnement 65 d'une ou plusieurs données de fonctionnement DI de l'aéronef 1.

Dès lors, le contrôleur 80 est configuré pour effectuer la détermination STPINT, à partir d'un modèle d'efforts M prenant en compte ladite température T et ladite pression d'amortisseur P ainsi que la ou les données de fonctionnement DI, des trois composantes sol FSX, FSY, FSZ et des trois composantes d'attache FAX, FAY, FAZ au niveau de chaque connecteur.

Par exemple, le procédé de détection d'un atterrissage dur comporte une détermination STPINT1, avec un module de mouvement M1 du modèle d'efforts M appliqué par le contrôleur 80, d'une longueur CRSE de l'amortisseur 15 selon son axe de compression/extension à partir de la pression d'amortisseur P ainsi que de la température T. Par exemple, la longueur CRSE est la distance séparant deux axes d'articulation de l'amortisseur, respectivement à la jambe de train 20 et à la structure 4 selon l'exemple illustré. Cette longueur CRSE augmente lorsque l'amortisseur 15 s'étend et diminue lorsque l'amortisseur 15 est comprimé. De plus, le contrôleur 80 peut être configuré pour déterminer durant une étape STPINT2, avec un module d'efforts M2 du modèle d'efforts M, des composantes sol FSX, FSY, FSZ à partir de la longueur CRSE ainsi que de la pression d'amortisseur P et d'au moins une donnée de fonctionnement DI. Enfin, le contrôleur 80 peut être configuré pour déterminer durant une étape STPINT3, avec un module de transformation M3 du modèle d'efforts M, des composantes d'attache FAX1, FAY1, FAZ1, FAX2, FAY2, FAZ2 à partir des composantes sol FSX, FSY, FSZ.

Chaque module peut prendre par exemple la forme d'une ou plusieurs lois mathématiques établies par essais, calculs ou simulations, ou d'un dispositif d'intelligence artificielle tel qu'un réseau de neurones par exemple.

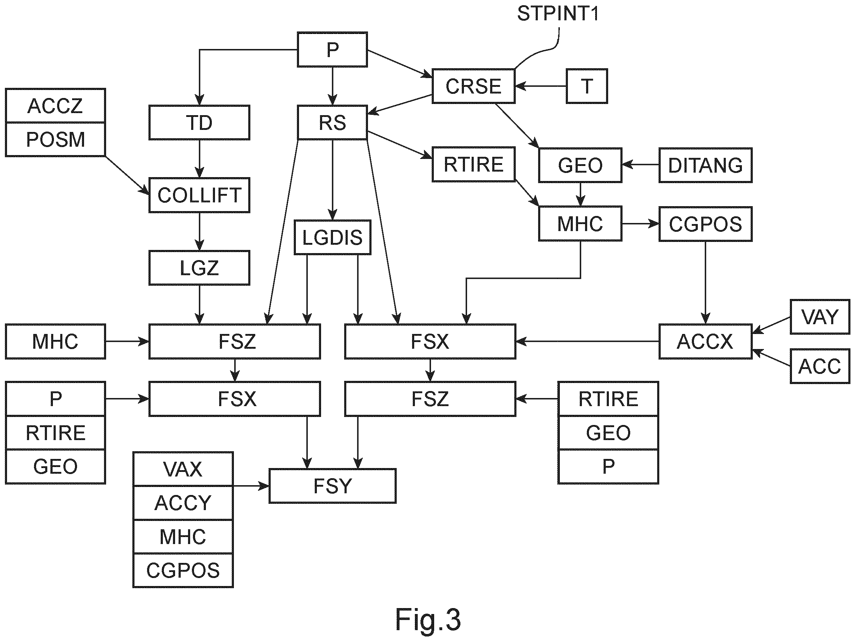

La figure 3 illustre des exemples de modèle d'efforts permettant de calculer les composantes sol.

A partir de la pression d'amortisseur P mesurée avec le senseur de pression 55 et de la température T mesurée avec le senseur de température 60, le modèle d'efforts est configuré pour calculer la longueur CRSE de l'amortisseur 15.

A partir de la pression d'amortisseur P et de la longueur CRSE, le contrôleur 80 peut être configuré pour calculer une force de chargement RS exercée sur l'amortisseur 15 selon l'axe de compression/extension de l'amortisseur 15.

Optionnellement, le contrôleur 80 peut éventuellement évaluer la répartition LGDIS des efforts par train d'atterrissage 10 de l'aéronef 1 à partir des efforts de chargement au niveau de chaque train d'atterrissage 10, à des fins de vérifications par exemple. Pour chaque train d'atterrissage 10, cette répartition peut être égale au quotient de l'effort de chargement de ce train d'atterrissage 10 divisé par la somme des efforts de chargement.

En parallèle, à partir de la force de chargement RS, le contrôleur 80 peut évaluer le rayon RTIRE d'un pneumatique de la roue 112 de ce train d'atterrissage 10, via une loi prédéterminée mémorisée. En outre, le contrôleur 80 peut évaluer une forme GEO du train d'atterrissage 10 à partir de la longueur CRSE et de données de fonctionnement DI, en particulier d'un angle de tangage DITANG de l'aéronef 1 mesuré avec le senseur de tangage 67. La forme GEO désigne la forme géométrique en tant que telle du train d'atterrissage et son positionnement par rapport au sol, à savoir par exemple les coordonnées des composants du train d'atterrissage dans un repère attaché au sol.

Dès lors, le contrôleur 80 peut être configuré pour déduire du rayon RTIRE et de cette forme GEO obtenus pour chaque train d'atterrissage, une masse MHC de l'aéronef 1.

Alternativement, cette masse peut être évaluée avec un senseur de masse.

Dès lors, selon un premier exemple du modèle d'efforts le contrôleur 80 peut déterminer la composante sol en roulis FSX, dénommée usuellement composante sol longitudinale. Le contrôleur 80 en déduit la composante sol en lacet FSZ, dénommée usuellement composante sol verticale, puis la composante sol en tangage FSY dénommée usuellement composante sol latérale.

Ainsi, le contrôleur 80 peut déduire de cette masse MHC, une position CGPOS du centre de gravité de l'aéronef 1 selon l'axe de lacet, puis une accélération longitudinale ACCX de l'aéronef 1 au niveau de son centre de gravité et selon l'axe de roulis à partir de cette position CGPOS du centre de gravité de l'aéronef 1 selon l'axe de lacet ainsi que d'une vitesse angulaire en tangage VAY mesurée avec le senseur de vitesse en tangage 70 et de l'accélération longitudinale ACC de l'aéronef 1 selon l'axe de roulis mesurée avec le senseur d'accélération en roulis 72.

Par ailleurs, le contrôleur 80 peut être configuré pour déduire la composante sol FSX selon l'axe de roulis à partir de la force de chargement RS, de la masse MHC de l'aéronef 1 et de l'accélération longitudinale ACCX de l'aéronef 1 au niveau du centre de gravité et selon l'axe de roulis. Le contrôleur 80 est configuré pour en déduire la composante sol FSZ en lacet éventuellement en prenant en considération le rayon RTIRE ainsi que la pression d'amortisseur P et la forme GEO, puis la composante sol FSY selon l'axe de tangage à partir de la masse MHC de l'aéronef 1, de la position CGPOS du centre de gravité de l'aéronef 1 selon l'axe de lacet, voire de la vitesse angulaire en roulis VAX de l'aéronef 1 mesurée avec le senseur de vitesse en roulis 69 et de l'accélération ACCY de l'aéronef selon l'axe de tangage mesurée avec le senseur d'accélération en tangage 73.

De manière complémentaire ou alternative, un deuxième exemple de modèle d'efforts peut permettre de déterminer la composante sol en lacet FSZ pour en déduire la composante sol en roulis FSX puis la composante sol en tangage FSY.

Ainsi, le contrôleur 80 est configuré pour évaluer si l'aéronef 1 a touché le sol TD. En outre, le contrôleur 80 est configuré pour déterminer une loi COLLIFT fournissant une portance en fonction d'une position d'une commande de pas collectif des pales du rotor 3 mesurée avec le senseur de position 78 lors d'une étape de mesure POSM s'étendant sur une durée prédéterminée avant le touché de l'aéronef 1, et une accélération verticale ACCZ de l'aéronef 1 selon l'axe de lacet mesurée avec le senseur d'accélération en lacet 74 lors de la durée prédéterminée.

Après le touché, le contrôleur 80 est configuré pour évaluer une force LGZ selon l'axe de lacet en fonction de l'accélération verticale ACCZ de l'aéronef 1, de la position de la commande de pas collectif des pales du rotor 3 et de la loi COLLIFT.

Par ailleurs, le contrôleur 80 peut être configuré pour en déduire la composante sol FSZ selon l'axe de lacet à l'aide de la masse MHC précitée. Le contrôleur 80 peut être configuré pour en déduire la composante sol FSX selon l'axe de roulis à l'aide de la pression d'amortisseur P, du rayon RTIRE et de la forme GEO précités. Le contrôleur 80 peut être configuré pour déduire la composante sol FSY selon l'axe de tangage à partir de la masse MHC de l'aéronef 1, de la position CGPOS du centre de gravité de l'aéronef 1 selon l'axe de lacet, voire de la vitesse angulaire en roulis VAX de l'aéronef 1 mesurée avec le senseur de vitesse en roulis 69 et de l'accélération ACCY de l'aéronef selon l'axe de tangage mesurée avec le senseur d'accélération en tangage 73.

Eventuellement, les composantes sol déterminées via les deux exemples décrits peuvent être comparées, pour affiner les résultats selon des techniques connues, voire pour déclencher une alerte de dysfonctionnement en cas de différences excédant un seuil.

Indépendamment de la manière d'évaluer les composantes sol et d'attache, à chaque cycle de surveillance PCY, le contrôleur 80 est configuré pour déduire des composantes sol et d'attache si l'atterrissage étudié est un atterrissage dur.

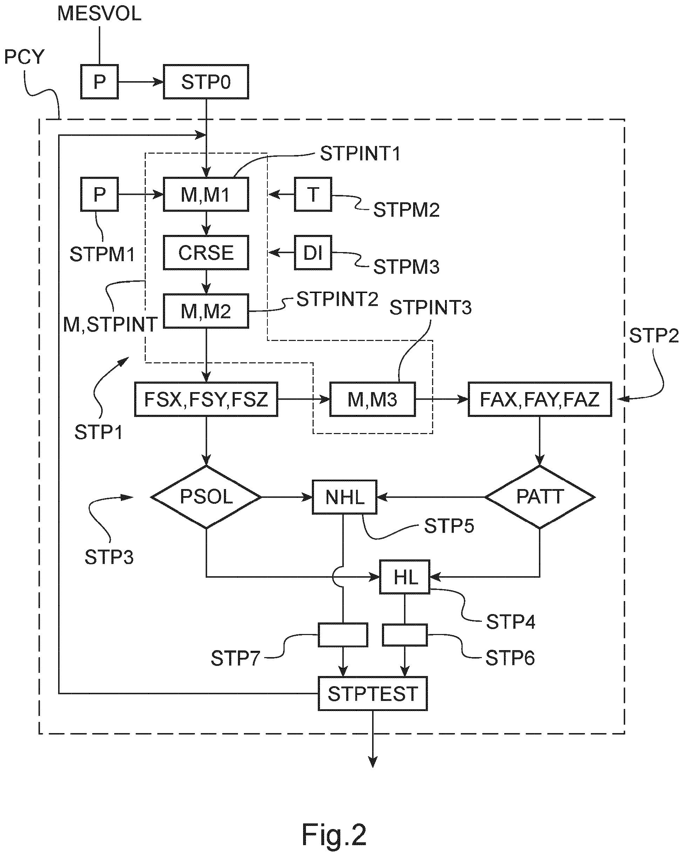

Ainsi et en référence à la figure 2, le procédé de détection d'un atterrissage dur comporte la détermination STP3, avec le contrôleur 80, qu'un point d'effort sol PSOL ayant pour coordonnées les trois composantes sol FSX, FSY, FSZ dans un diagramme sol est dans ou en dehors d'un volume délimité par une enveloppe de dimensionnement sol 200 prédéterminée. De plus, le contrôleur détermine, pour chaque connecteur 30, qu'un point d'effort d'attache PATT ayant pour coordonnées les trois composantes d'attache correspondantes dans un diagramme d'attache est dans ou en dehors du volume délimité par une enveloppe de dimensionnement d'attache 300 prédéterminée propre à ce connecteur 30.

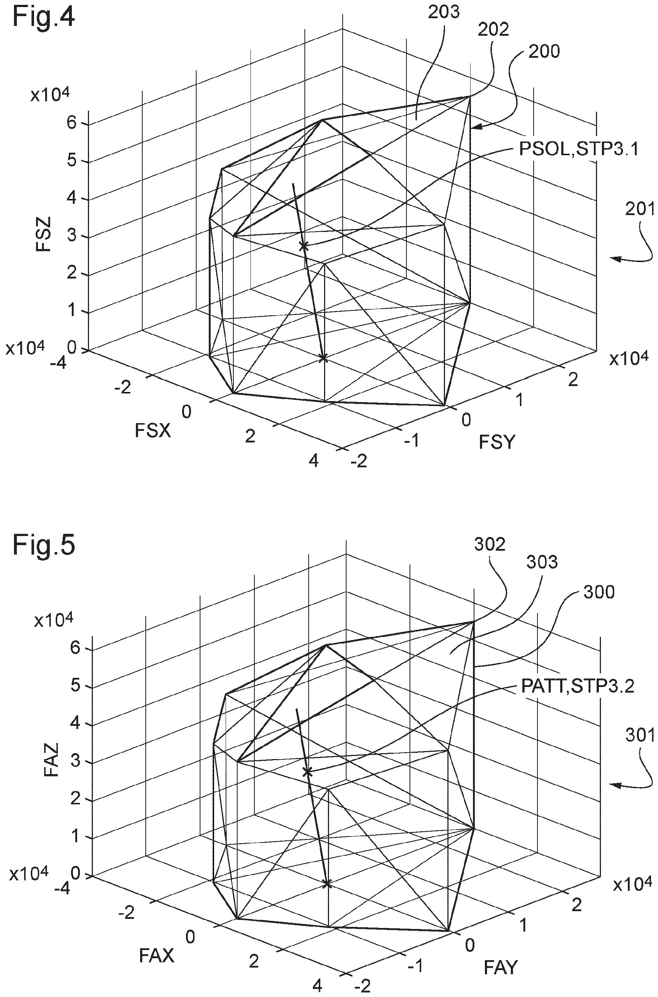

La figure 4 illustre une enveloppe de dimensionnement sol 200 dans un diagramme à trois dimensions dénommé « diagramme sol 201 » par commodité.

Ainsi, l'enveloppe de dimensionnement sol 200 comporte des points dits « points dimensionnant sol 202 » par commodité. Ces points dimensionnant sol 202 sont reliés par des surfaces dites « surfaces sol 203 ». Les surfaces sol 203 peuvent être planes, l'enveloppe de dimensionnement sol 200 étant alors un polyèdre. Chaque point dimensionnant sol 202 peut être établi par au moins une simulation, un calcul ou un essai. Chaque point dimensionnant sol 202 a pour coordonnées dans le diagramme sol 201 les composantes selon les trois axes de référence AX, AY, AZ de la force maximale subie par l'atterrisseur à l'interface entre l'organe de contact 11 et le sol 100 lors d'un cas d'atterrissage limite prédéterminé.

Ainsi, le procédé de détection d'un atterrissage dur peut comporter une détermination STP3.1 avec le contrôleur 80 que le point d'effort sol PSOL a pour coordonnées les trois composantes sol FSX, FSY, FSZ dans le diagramme sol 201 pour évaluer où se situe ce point d'effort sol PSOL par rapport à l'enveloppe de dimensionnement sol 200 associée.

La figure 5 illustre une enveloppe de dimensionnement d'attache 300 dans un diagramme à trois dimensions dénommé « diagramme d'attache 301 » par commodité.

Ainsi, l'enveloppe de dimensionnement d'attache 300 comporte des points dits « points dimensionnant d'attache 302 ». Ces points dimensionnant d'attache 302 sont reliés par des surfaces dites « surfaces d'attache 303 ». Les surfaces d'attache 303 peuvent être planes, l'enveloppe de dimensionnement d'attache 300 étant alors un polyèdre. Chaque point dimensionnant d'attache 302 peut être établi par au moins une simulation, un calcul ou un essai. Chaque point dimensionnant d'attache 302 a pour coordonnées dans le diagramme d'attache 301 les composantes selon les trois axes de référence AX, AY, AZ de la force maximale subie par le connecteur 30 concerné lors d'un cas d'atterrissage limite prédéterminé.

Ainsi, le procédé de détection d'un atterrissage dur peut comporter une détermination STP3.2 avec le contrôleur 80 que le point d'effort d'attache PATT a pour coordonnées les trois composantes d'attache FAX, FAY, FAZ associées dans le diagramme d'attache pour évaluer où se situe ce point d'effort d'attache PATT par rapport à l'enveloppe de dimensionnement d'attache 300 associée.

En référence à la figure 2, le procédé de détection d'un atterrissage dur comporte la détermination STP4 avec le contrôleur 80 de la présence d'un atterrissage dur quand au moins le point d'effort sol PSOL est en dehors de l'enveloppe de dimensionnement sol 200 ou au moins un point d'effort d'attache PATT est en dehors de l'enveloppe de dimensionnement d'attache 300 correspondante. Cette étape peut être réalisée à chaque cycle de surveillance ou à l'issue des cycles de surveillance.

Dès lors, si lors d'un cycle de surveillance les composantes sol FSX, FSY, FSZ placent un point d'effort sol PSOL en dehors de l'enveloppe de dimensionnement sol 200 dans le diagramme sol, alors le contrôleur 80 estime que l'atterrissage est un atterrissage dur, quelles que soient les positions des autres points d'efforts. La figure 5 illustre une telle situation.

De même, si lors d'un cycle de surveillance les composantes d'attache FAX, FAY, FAZ placent un point d'effort d'attache PATT en dehors de l'enveloppe de dimensionnement d'attache 300 correspondante dans le diagramme d'attache concerné, alors le contrôleur 80 estime que l'atterrissage est un atterrissage dur, quelles que soient les positions des autres points d'efforts.

Eventuellement, le procédé de détection d'un atterrissage dur comporte une génération HL d'une alerte de maintenance avec l'alerteur 85 suite à une détermination de la présence d'un atterrissage dur. Eventuellement, une alerte est uniquement émise à l'issue du procédé de détection d'un atterrissage dur si au moins un point d'effort sol PSOL ou d'attache PATT était en dehors de l'enveloppe de dimensionnement 200, 300 associée.

Le cas échéant, suite à la détermination de la présence d'un atterrissage dur, le procédé de détection d'un atterrissage dur peut comporter l'étude STP6 de chaque point critique pour évaluer quelle pièce mécanique du train d'atterrissage 10 doit être inspectée en priorité. L'expression « pièce mécanique » désigne tout élément susceptible d'être détérioré, par exemple en subissant une déformation plastique lors d'un atterrissage dur. Pour illustrer ces propos, une pièce mécanique peut prendre la forme d'une vis, d'une jambe de train, d'un composant d'un amortisseur 15, d'un composant d'un connecteur 30 et par exemple une joue d'une chape ou un axe de pivotement, une fusée d'une roue, un palier...

Un point critique est un point d'effort sol PSOL situé en dehors d'une enveloppe de dimensionnement sol 200 dans le diagramme sol 201, ou un point d'effort d'attache PATT situé en dehors de l'enveloppe de dimensionnement d'attache 300 correspondante dans le diagramme d'attache 301 considéré.

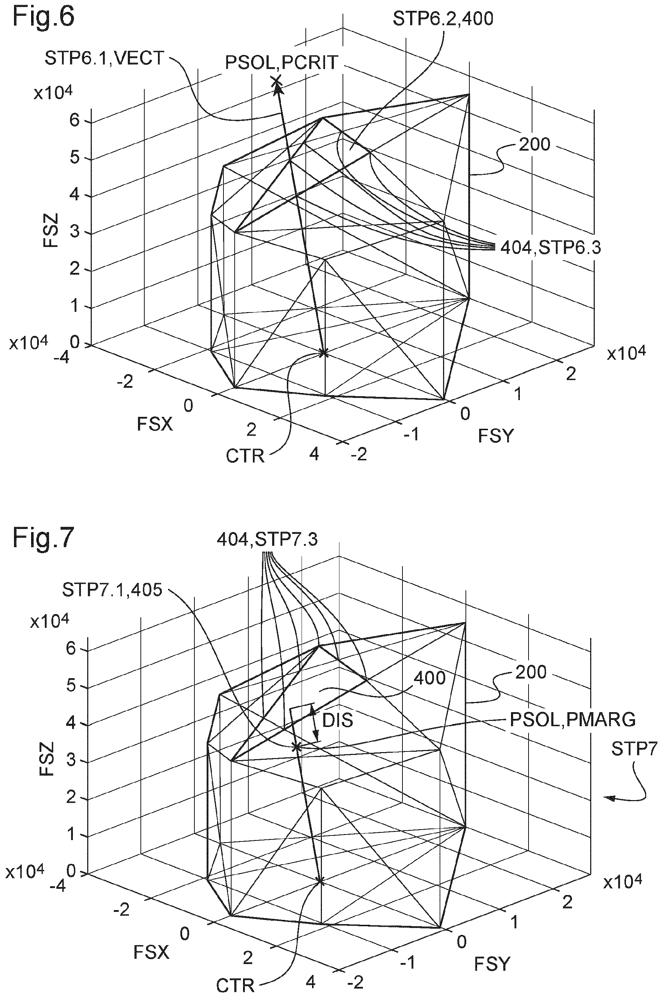

En référence à la figure 6, cette étude STP6 comporte la détermination STP6.1 avec le contrôleur 80 d'un vecteur VECT reliant le point critique et une origine CTR du diagramme 201,301 associé, le diagramme sol 201 selon l'exemple illustré. De plus, le contrôleur 80 est configuré pour effectuer la détermination STP6.2 d'une surface 400 de l'enveloppe de dimensionnement 200, 300 considérée traversée par le vecteur VECT. Par suite, le contrôleur 80 transmet un signal de commande à l'alerteur 85 pour requérir un affichage STP6.3 d'une alerte signalant que chaque composant associé à un point dimensionnant 404 formant un sommet de la surface 400 traversée par le vecteur VECT est une pièce mécanique à inspecter.

A cet effet, la mémoire 82 peut mémoriser pour chaque point dimensionnant la ou les pièces mécaniques à inspecter. Le contrôleur 80 ou l'alerteur 85 est configuré pour consulter cette mémoire 82 et déterminer la ou les pièces mécaniques à inspecter.

En référence à la figure 3, le procédé de détection d'un atterrissage dur peut comporter la détermination STP5 avec le contrôleur 80 de la présence d'un atterrissage normal quand aucun point d'effort sol PSOL n'est en dehors de l'enveloppe de dimensionnement sol 200 et aucun point d'effort d'attache PATT n'est en dehors de l'enveloppe de dimensionnement d'attache 300 correspondante.

Eventuellement, le procédé de détection d'un atterrissage dur comporte une génération NHL d'une alerte de normalité avec l'alerteur 85 lorsqu'aucun point d'effort sol PSOL n'est en dehors de l'enveloppe de dimensionnement sol 200 et qu'aucun point d'effort d'attache PATT n'est en dehors de l'enveloppe de dimensionnement d'attache 300 correspondante.

Le cas échéant et en référence à la figure 7, suite à la détermination de la présence d'un atterrissage normal, le procédé de détection d'un atterrissage dur peut comporter l'étude STP7 de chaque point à la marge PMARG pour évaluer quelle pièce mécanique du train d'atterrissage doit être inspectée en priorité.

Un point à la marge PMARG est un point d'effort sol PSOL situé dans l'enveloppe de dimensionnement sol 200 à une distance DIS de cette enveloppe de dimensionnement sol 200 inférieure à un seuil, ou un point d'effort d'attache PATT situé dans l'enveloppe de dimensionnement d'attache 300 correspondante à une distance DIS de cette enveloppe de dimensionnement d'attache 300 inférieure à un seuil.

Ainsi, le contrôleur 80 est configuré pour déterminer si un point d'effort sol PSOL ou d'attache PATT est un point à la marge PMARG. En référence à la figure 7, pour chaque point à la marge PMARG, le contrôleur 80 est configuré pour effectuer la détermination STP7.1 d'une demi-droite 405 partant d'une origine CTR du diagramme 201, 301 associé et passant par le point à la marge PMARG. De plus, le contrôleur 80 est configuré pour effectuer la détermination STP7.2 d'une surface 400 traversée par la demi-droite 405. Par suite, le contrôleur 80 transmet un signal de commande à l'alerteur 85 pour requérir un affichage STP7.3 d'une alerte signalant que chaque composant associé à un point dimensionnant 404 formant un sommet de la surface 400 traversée par la demi-droite 405 est une pièce mécanique à inspecter.

En référence à la figure 3, à l'issue d'un cycle de surveillance, le contrôleur 80 peut être configuré pour déterminer si la phase d'atterrissage PHASATT est terminée. Par exemple, le contrôleur 80 est configuré pour estimer lors d'une étape de test STPTEST si chaque train d'atterrissage dudit au moins un train d'atterrissage repose sur le sol, et si ladite pression d'amortisseur pour chaque train d'atterrissage est supérieure à un seuil de test mémorisé ou calculé. Dans l'affirmative, le procédé de détection d'un atterrissage dur est terminé. Dans la négative un nouveau cycle de surveillance est réalisé.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé de détection d'un atterrissage dur pour détecter la survenue d'un atterrissage dur lors d'une phase d'atterrissage (PHASATT) effectuée par un aéronef (1), l'aéronef (1) étant muni d'au moins un train d'atterrissage (10) comprenant un organe de contact (11) venant en contact avec le sol (100) lors d'un atterrissage et au moins deux connecteurs (30) connectés à une structure (4) de l'aéronef (1), ledit train d'atterrissage (10) comprenant au moins un amortisseur (15) contenant au moins un fluide (16),
**caractérisé en ce que** le procédé de détection d'un atterrissage dur comporte une réalisation de cycles de surveillance (PCY) successifs, chaque cycle de surveillance (PCY) comprenant les étapes suivantes :
- avec un contrôleur (80) détermination (STP1) de trois composantes sol (FSX, FSY, FSZ) d'une force de réaction du sol à une interface entre le sol (100) et l'organe de contact (11) et selon respectivement trois axes de référence (AX, AY, AZ) distincts et non coplanaires (1), et détermination (STP2) pour chaque connecteur (30) de trois composantes d'attache (FAX, FAY, FAY) d'une force exercée sur ce connecteur (30) respectivement selon lesdits trois axes de référence (AX, AY, AZ),
- détermination (STP3) avec le contrôleur (80) qu'un point d'effort sol (PSOL) défini par les trois composantes sol (FSX, FSY, FSZ) est dans ou en dehors d'un volume sol délimité par une enveloppe de dimensionnement sol (200) dans un diagramme sol (201) à trois dimensions, et pour chaque connecteur (30) qu'un point d'effort d'attache (PATT) défini par les trois composantes d'attache (FAX, FAY, FAY) correspondantes est dans ou en dehors d'une volume d'attache délimité par une enveloppe de dimensionnement d'attache (300) dans un diagramme d'attache (301) à trois dimensions propre,
- détermination (STP4) de la présence d'un atterrissage dur quand au moins le point d'effort sol (PSOL) est en dehors de l'enveloppe de dimensionnement sol (200) ou au moins un point d'effort d'attache (PATT) est en dehors de l'enveloppe de dimensionnement d'attache (300) correspondante.

2. Procédé de détection d'un atterrissage dur selon la revendication 1,
**caractérisé en ce que** le procédé de détection d'un atterrissage dur comporte une détermination (STP3.1), avec le contrôleur, que le point d'effort sol (PSOL) a pour coordonnées les trois composantes sol (FSX, FSY, FSZ) dans le diagramme sol (201) à trois dimensions, et pour chaque connecteur une détermination (STP3.2) avec le contrôleur (80) que le point d'effort d'attache (PATT) associé a pour coordonnées les trois composantes d'attache (FAX, FAY, FAZ) associées dans le diagramme d'attache (301) à trois dimensions (301) propre au connecteur (30) concerné.

3. Procédé de détection d'un atterrissage dur selon l'une quelconque des revendications 1 à 2,
**caractérisé en ce que** le procédé de détection d'un atterrissage dur comporte une génération (HL) d'une alerte de maintenance avec un alerteur (85) suite à une détermination de la présence d'un atterrissage dur ou une génération (NHL) d'une alerte de normalité avec l'alerteur lorsqu'aucun point d'effort sol (PSOL) est en dehors de l'enveloppe de dimensionnement sol (200) et qu'aucun point d'effort d'attache (PATT) est en dehors de l'enveloppe de dimensionnement d'attache (300) correspondante.

4. Procédé de détection d'un atterrissage dur selon l'une quelconque des revendications 1 à 3,
**caractérisé en ce que** lesdits trois axes de référence sont un axe de roulis (AX) de l'aéronef (1), un axe de tangage (AY) de l'aéronef (1) et un axe de lacet (AZ) de l'aéronef (1).

5. Procédé de détection d'un atterrissage dur selon l'une quelconque des revendications 1 à 4,
**caractérisé en ce que** ledit procédé de détection d'un atterrissage dur comporte des mesures successives, en vol et avec un senseur de pression (55), d'une pression d'amortisseur (P) dudit fluide (16), ledit contrôleur (80) étant configuré pour estimer que ladite phase d'atterrissage (PHASATT) débute lorsqu'une différence relative entre deux mesures successives de ladite pression d'amortisseur (P) dépasse un seuil de déclenchement.

6. Procédé de détection d'un atterrissage dur selon l'une quelconque des revendications 1 à 5,
**caractérisé en ce que** ledit procédé de détection d'un atterrissage dur comporte une mesure avec un senseur de pression d'une pression d'amortisseur (P) dudit fluide (16) lors de la phase d'atterrissage (PHASATT), ledit contrôleur (80) étant configuré pour estimer que ladite phase d'atterrissage (PHASATT) est terminée lorsque :
- chaque train d'atterrissage dudit au moins un train d'atterrissage repose sur le sol, et
- ladite pression d'amortisseur pour chaque train d'atterrissage dudit au moins un train d'atterrissage est supérieure à un seuil de test mémorisé ou calculé pendant une durée de référence.

7. Procédé de détection d'un atterrissage dur selon l'une quelconque des revendications 1 à 6,
**caractérisé en ce que** ladite enveloppe de dimensionnement sol (200) comporte des points dimensionnant sol (202) et chaque enveloppe de dimensionnement d'attache (300) comporte des points dimensionnant d'attache (302), chaque point dimensionnant sol (202) représentant une force maximale subie à une interface entre l'organe de contact (11) et le sol (100) lors d'un cas d'atterrissage limite, et pour chaque connecteur chaque point dimensionnant d'attache (302) représentant une force maximale subie par le connecteur (30) concerné lors du cas d'atterrissage limite.

8. Procédé de détection d'un atterrissage dur selon l'une quelconque des revendications 1 à 7,
**caractérisé en ce que** lesdites déterminations (STP1, STP2) avec un contrôleur (80) de trois composantes sol (FSX, FSY, FSZ) et de trois composantes d'attache (FAX, FAY, FAZ) par connecteur (30) comportent les étapes suivantes :
- mesure (STPM1) lors du cycle de surveillance courant avec un senseur de pression (55) d'une pression d'amortisseur (P) dudit fluide (16),
- mesure (STPM2), pendant ou en dehors de la phase d'atterrissage, avec un senseur de température (60) d'une température (T) dans ou en dehors dudit amortisseur (15),
- mesure (STPM3) lors du cycle de surveillance courant avec un senseur de données de fonctionnement (65) d'une ou plusieurs données de fonctionnement (DI) dudit aéronef (1),
- détermination (STPINT), avec le contrôleur (80), à partir d'un modèle d'efforts (M) prenant en compte ladite température (T) et ladite pression d'amortisseur (P) ainsi que la ou les données de fonctionnement (DI) des trois composantes sol (FSX, FSY, FSZ) et des trois composantes d'attache (FAX, FAY, FAZ) par connecteur.

9. Procédé de détection d'un atterrissage dur selon la revendication 8,
**caractérisé en ce que** la ou les données de fonctionnement (DI) sont comprises dans une liste étendue comprenant : un angle de roulis de l'aéronef (1), un angle de tangage de l'aéronef (1), un angle de lacet de l'aéronef (1), une vitesse angulaire en roulis de l'aéronef (1), une vitesse angulaire en tangage de l'aéronef (1), une vitesse angulaire en lacet de l'aéronef (1), une accélération longitudinale selon un axe de roulis de l'aéronef (1), une accélération latérale selon un axe de tangage de l'aéronef (1), une accélération verticale selon un axe de lacet de l'aéronef (1), une masse de l'aéronef (1), une portance de l'aéronef (1), une position d'une commande de pas collectif d'un rotor (3) de l'aéronef (1), une position d'une commande de pas cyclique d'un rotor (3) de l'aéronef (1), une position du centre de gravité de l'aéronef (1), une pression de gonflage d'un pneu dudit train d'atterrissage (10), une position d'un composant dudit train d'atterrissage (10), un angle de pas collectif de pales d'un rotor (3) de l'aéronef (1), un angle de plateau cyclique d'un rotor (3) de l'aéronef (1).

10. Procédé de détection d'un atterrissage dur selon l'une quelconque des revendications 8 à 9,
**caractérisé en ce que** ladite détermination (STPINT) à partir d'un modèle d'efforts (M) des trois composantes sol (FSX, FSY, FSZ) et des trois composantes d'attache (FAX, FAY, FAZ) par connecteur comporte : (a) une détermination (STPINT1), avec un module de mouvement (M1) du modèle d'efforts (M) appliqué par le contrôleur (80), d'une longueur (CRSE) dudit amortisseur (15) à partir de ladite pression d'amortisseur (P) ainsi que de ladite température (T), et (b) une détermination (STPINT2), avec un module d'efforts (M2) du modèle d'efforts (M), des composantes sol (FSX, FSY, FSZ) à partir de ladite longueur (CRSE) ainsi que de ladite pression d'amortisseur (P) et d'au moins une dite donnée de fonctionnement (DI), et (c) une détermination (STPINT3), avec un module de transformation (M3) du modèle d'efforts (M), des composantes d'attache (FAX, FAY, FAZ) à partir des composantes sol (FSX, FSY, FSZ).

11. Procédé de détection d'un atterrissage dur selon l'une quelconque des revendications 1 à 10,
**caractérisé en ce que**, chaque enveloppe de dimensionnement sol et d'attache comprenant des points dimensionnant reliés par des surfaces, un point d'effort sol (PSOL) ou un point d'effort d'attache (PATT) situé en dehors d'une enveloppe de dimensionnement (200, 300) correspondante étant un point critique (PCRIT), chaque point dimensionnant (202, 302 ) étant associé à au moins un composant du train d'atterrissage (10), suite à la détermination de la présence d'un atterrissage dur, ledit procédé de détection d'un atterrissage dur comporte pour chaque point critique : (i) détermination (STP6.1) d'un vecteur (VECT) reliant le point critique et une origine (CTR) du diagramme sol ou d'attache associé, (ii) détermination (STP6.2) d'une dite surface (400) de ladite enveloppe de dimensionnement (200, 300) correspondante traversée par le vecteur (VECT), (iii) affichage (STP6.3) d'une alerte signalant que chaque composant associée à un point dimensionnant formant un sommet de la surface (400) traversée par le vecteur (VECT) est une pièce mécanique à inspecter.

12. Procédé de détection d'un atterrissage dur selon l'une quelconque des revendications 1 à 11,
**caractérisé en ce que**, chaque enveloppe de dimensionnement sol et d'attache comprenant des points dimensionnant reliés par des surfaces, un point d'effort sol (PSOL) ou un point d'effort d'attache (PATT) situé à une distance prédéterminée (DIS) de l'enveloppe de dimensionnement (200), 300) correspondante étant un point à la marge, lorsque le point d'effort sol (PSOL) est dans l'enveloppe de dimensionnement sol (200) et tous les points d'efforts d'attache (PATT) sont dans l'enveloppe de dimensionnement d'attache (300) correspondante, pour chaque point à la marge (PMARG) : (i) détermination (STP7.1) d'une demi-droite (405) partant d'une origine (CTR) du diagramme sol ou d'attache associé et passant par le point à la marge (PMARG), (ii) détermination (STP7.2) d'une dite surface traversée par la demi-droite (405), (iii) affichage (STP7.3) d'une alerte signalant que chaque composant associé à un point dimensionnant (404) formant un sommet de la surface (400) traversée par la demi-droite est une pièce mécanique à inspecter.

13. Système (50) de détection d'un atterrissage dur pour détecter la survenue d'un atterrissage dur lors d'une phase d'atterrissage effectuée par un aéronef (1), l'aéronef (1) étant muni d'un train d'atterrissage (10) comprenant un organe de contact (11) venant en contact avec le sol (100) lors d'un atterrissage et au moins deux connecteurs (30) connectés à une structure (4) de l'aéronef (1), ledit train d'atterrissage (10) comprenant un amortisseur (15) contenant au moins un fluide (16),
tel que le système (50) de détection d'un atterrissage dur est configuré pour appliquer le procédé selon l'une quelconque des revendications 1 à 12 et comprend :
- un senseur de température (60), un senseur de pression (55) d'une pression d'amortisseur dudit fluide (16), un senseur de données de fonctionnement (65),
- un contrôleur (80) configuré pour déterminer (STP1) trois composantes sol (FSX, FSY, FSZ) d'une force de réaction du sol à une interface entre le sol (100) et l'organe de contact (11) et selon respectivement trois axes de référence (AX, AY, AZ) distincts et non coplanaires (1), et déterminer (STP2) pour chaque connecteur (30) trois composantes d'attache (FAX, FAY, FAY) d'une force exercée sur ce connecteur (30) respectivement selon lesdits trois axes de référence (AX, AY, AZ),
- le contrôleur (80) étant configuré pour déterminer (STP3) qu'un point d'effort sol (PSOL) défini par les trois composantes sol (FSX, FSY, FSZ) est dans ou en dehors d'un volume sol délimité par une enveloppe de dimensionnement sol (200) dans un diagramme sol (201) à trois dimensions, et pour chaque connecteur (30) qu'un point d'effort d'attache (PATT) défini par les trois composantes d'attache (FAX, FAY, FAY) correspondantes est dans ou en dehors d'une volume d'attache délimité par une enveloppe de dimensionnement d'attache (300) dans un diagramme d'attache (301) à trois dimensions propre,
- le contrôleur (80) étant configuré pour déterminer (STP4) la présence d'un atterrissage dur quand au moins le point d'effort sol (PSOL) est en dehors de l'enveloppe de dimensionnement sol (200) ou au moins un point d'effort d'attache (PATT) est en dehors de l'enveloppe de dimensionnement d'attache (300) correspondante.

14. Ensemble ayant un aéronef (1) muni d'un train d'atterrissage (10) comprenant un organe de contact (11) venant en contact avec le sol lors d'un atterrissage, au moins deux connecteurs (30) connectés à une structure (4) de l'aéronef (1), et un amortisseur (15) contenant au moins un fluide (16),
**caractérisé en ce que** ledit ensemble est muni d'un système (50) de détection d'un atterrissage dur selon la revendication 13, ledit système (50) de détection d'un atterrissage dur étant au moins partiellement agencé dans ledit aéronef (1).

## Patentansprüche

1. Hartlandungserkennungsverfahren zur Erkennung des Auftretens einer harten Landung während einer von einem Luftfahrzeug (1) durchgeführten Landephase (PHASATT), wobei das Luftfahrzeug (1) mit mindestens einem Landegestell (10) ausgestattet ist, das Landegestell (10) ein Kontaktelement (11), das bei einer Landung mit dem Boden (100) in Kontakt kommt, und mindestens zwei Anbindungen (30) umfasst, die mit einer Struktur (4) des Luftfahrzeugs (1) verbunden sind, wobei das Landegestell (10) mindestens einen Stoßdämpfer (15) umfasst, der mindestens ein Fluid (16) enthält,
**dadurch gekennzeichnet, dass** das Hartlandungserkennungsverfahren die Durchführung aufeinanderfolgender Überwachungszyklen (PCY) umfasst, wobei jeder Überwachungszyklus (PCY) die folgenden Schritte umfasst:
- mit einem Controller (80) Bestimmen (STP1) von drei Bodenkomponenten (FSX, FSY, FSZ) einer Bodenreaktionskraft an einer Grenzfläche zwischen dem Boden (100) und dem Kontaktelement (11) entlang von je drei verschiedenen und nicht koplanaren Referenzachsen (AX, AY, AZ) und für jede Anbindung (30) Bestimmen (STP2) von drei Befestigungskomponenten (FAX, FAY, FAY) einer auf diese Anbindung (30) jeweils entlang der drei Referenzachsen (AX, AY, AZ) ausgeübten Kraft,
- mit dem Controller (80) Bestimmen (STP3), dass ein durch die drei Bodenkomponenten (FSX, FSY, FSZ) definierter Bodenkraftpunkt (PSOL) in einem dreidimensionalen Bodendiagramm (201) innerhalb oder außerhalb eines durch eine Bodenbemessungshülle (200) begrenzten Bodenkraftvolumens liegt, und für jede Anbindung (30), dass ein durch die drei entsprechenden Anbindungskomponenten (FAX, FAY, FAY) definierter Anbindungskraftpunkt (PATT) in einem eigenen dreidimensionalen Anbindungsdiagramm (301) innerhalb oder außerhalb eines durch eine Anbindungsbemessungshülle (300) begrenzten Anbindungsvolumens liegt,
- Bestimmen (STP4), dass eine harte Landung vorliegt, wenn mindestens der Bodenkraftpunkt (PSOL) außerhalb der Bodenbemessungshülle (200) oder mindestens ein Anbindungskraftpunkt (PATT) außerhalb der entsprechenden Anbindungsbemessungshülle (300) liegt.

2. Hartlandungserkennungsverfahren nach Anspruch 1,
**dadurch gekennzeichnet, dass** das Hartlandungserkennungsverfahren ein Bestimmen (STP3.1) durch den Controller umfasst, dass der Bodenkraftpunkt (PSOL) im dreidimensionalen Bodendiagramm (201) die drei Bodenkomponenten (FSX, FSY, FSZ) als Koordinaten hat, und für jede Anbindung ein Bestimmen (STP3.2) durch den Controller (80) umfasst, dass der zugehörige Anbindungskraftpunkt (PATT) im dreidimensionalen Anbindungsdiagramm (301) die drei zugehörigen Anbindungskomponenten (FAX, FAY, FAZ) der betreffenden Anbindung (30) als Koordinaten hat.

3. Hartlandungserkennungsverfahren nach einem der Ansprüche 1 bis 2,
**dadurch gekennzeichnet, dass** das Hartlandungserkennungsverfahren ein Erzeugen (HL) einer Wartungswarnung durch eine Warnvorrichtung (85) nach einer Feststellung des Vorliegens einer harten Landung oder ein Erzeugen (NHL) einer Normalitätswarnung durch die Warnvorrichtung, wenn sich kein Bodenkraftpunkt (PSOL) außerhalb der Bodenbemessungshülle (200) befindet und sich kein Anbindungskraftpunkt (PATT) außerhalb der entsprechenden Anbindungsbemessungshülle (300) befindet, umfasst.

4. Hartlandungserkennungsverfahren nach einem der Ansprüche 1 bis 3,
**dadurch gekennzeichnet, dass** die drei Referenzachsen eine Rollachse (AX) des Luftfahrzeugs (1), eine Nickachse (AY) des Luftfahrzeugs (1) und eine Gierachse (AZ) des Luftfahrzeugs (1) sind.

5. Hartlandungserkennungsverfahren nach einem der Ansprüche 1 bis 4,
**dadurch gekennzeichnet, dass** das Hartlandungserkennungsverfahren aufeinanderfolgende Messungen eines Dämpferdrucks (P) des Fluids (16) während des Flugs und mit einem Drucksensor (55) umfasst, wobei der Controller (80) konfiguriert ist, um anzunehmen, dass die Landephase (PHASATT) beginnt, wenn eine relative Differenz zwischen zwei aufeinanderfolgenden Messungen des Dämpferdrucks (P) einen Auslöseschwellwert überschreitet.

6. Hartlandungserkennungsverfahren nach einem der Ansprüche 1 bis 5,
**dadurch gekennzeichnet, dass** das Hartlandungserkennungsverfahren eine Messung eines Dämpferdrucks (P) des Fluids (16) mit einem Drucksensor während der Landephase (PHASATT) umfasst, wobei der Controller (80) konfiguriert ist, um die Landephase (PHASATT) als beendet zu betrachten, wenn:
- jedes Landegestell des mindestens einen Landegestells auf dem Boden aufliegt und
- der Dämpferdruck für jedes Landegestell des mindestens einen Landegestells während einer Referenzdauer über einem gespeicherten oder berechneten Testschwellenwert liegt.

7. Hartlandungserkennungsverfahren nach einem der Ansprüche 1 bis 6,
**dadurch gekennzeichnet, dass** die Bodenbemessungshülle (200) Bodenbemessungspunkte (202) und jede Anbindungsbemessungshülle (300) Anbindungsbemessungspunkte (302) aufweist, wobei jeder Bodenbemessungspunkt (202) eine maximale Kraft darstellt, die bei einem Grenzlandungsfall an einer Grenzfläche zwischen dem Kontaktelement (11) und dem Boden (100) auftritt, und wobei für jede Anbindung jeder Anbindungsbemessungspunkt (302) eine maximale Kraft darstellt, die bei dem Grenzlandungsfall an der betreffenden Anbindung (30) auftritt.

8. Hartlandungserkennungsverfahren nach einem der Ansprüche 1 bis 7,
**dadurch gekennzeichnet, dass** besagtes Bestimmen (STP1, STP2) von drei Bodenkomponenten (FSX, FSY, FSZ) und drei Anbindungskomponenten (FAX, FAY, FAZ) pro Anbindung (30) mit einem Controller (80) die folgenden Schritte umfasst:
- Messen (STPM1) eines Dämpferdrucks (P) des Fluids (16) im laufenden Überwachungszyklus mit einem Drucksensor (55),
- Messen (STPM2) einer Temperatur (T) innerhalb oder außerhalb des besagten Dämpfers (15) während oder außerhalb der Landephase mit einem Temperatursensor (60),
- Messen (STPM3) von ein oder mehreren Betriebsdaten (DI) des Luftfahrzeugs (1) während des laufenden Überwachungszyklus mit einem Betriebsdatensensor (65),
- Bestimmen (STPINT) der drei Anbindungskomponenten (FAX, FAY, FAZ) pro Anbindung und der drei Bodenkomponenten (FSX, FSY, FSZ) mit dem Controller (80) anhand eines Kraftmodells (M), das die Temperatur (T) und den Dämpferdruck (P) sowie die Betriebsdaten (DI) berücksichtigt.

9. Hartlandungserkennungsverfahren nach Anspruch 8,
**dadurch gekennzeichnet, dass** die Betriebsdaten (DI) in einer erweiterten Liste enthalten sind, die umfasst: einen Rollwinkel des Luftfahrzeugs (1), einen Nickwinkel des Luftfahrzeugs (1), einen Gierwinkel des Luftfahrzeugs (1), eine Rollwinkelgeschwindigkeit des Luftfahrzeugs (1), eine Nickwinkelgeschwindigkeit des Luftfahrzeugs (1), eine Gierwinkelgeschwindigkeit des Luftfahrzeugs (1), eine Längsbeschleunigung entlang einer Rollachse des Luftfahrzeugs (1), eine Querbeschleunigung entlang einer Nickachse des Luftfahrzeugs (1), eine Vertikalbeschleunigung entlang einer Gierachse des Luftfahrzeugs (1), eine Masse des Luftfahrzeugs (1), eine Auftriebskraft des Luftfahrzeugs (1), eine Position eines kollektiven Blattverstellantriebs eines Rotors (3) des Luftfahrzeugs (1), eine Position eines zyklischen Blattverstellantriebs eines Rotors (3) des Luftfahrzeugs (1), eine Position des Schwerpunktes des Luftfahrzeugs (1), einen Fülldruck eines Reifens des Landegestells (10), eine Position einer Komponente des Landegestells (10), einen kollektiven Blattverstellwinkel von Blättern eines Rotors (3) des Luftfahrzeugs (1), einen Taumelscheibenwinkel eines Rotors (3) des Luftfahrzeugs (1).

10. Hartlandungserkennungsverfahren nach einem der Ansprüche 8 bis 9,
**dadurch gekennzeichnet, dass** das Bestimmen (STPINT) der drei Bodenkomponenten (FSX, FSY, FSZ) und der drei Anbindungskomponenten (FAX, FAY, FAZ) pro Anbindung anhand eines Kraftmodells (M) umfasst: (a) Bestimmen (STPINT1) einer Länge (CRSE) des Dämpfers (15) aus dem Dämpferdruck (P) sowie der Temperatur (T) mit einem vom Controller (80) angewendeten Bewegungsmodul (M1) des Kraftmodells (M), und (b) Bestimmen (STPINT2) der Bodenkomponenten (FSX, FSY, FSZ) aus der besagten Länge (CRSE) sowie dem besagten Dämpferdruck (P) und mindestens einer besagten Betriebsgröße (DI) und (c) Bestimmen (STPINT3) der Anbindungskomponenten (FAX, FAY, FAZ) aus den Bodenkomponenten (FSX, FSY, FSZ) mit einem Transformationsmodul (M3) des Kraftmodells (M).

11. Hartlandungserkennungsverfahren nach einem der Ansprüche 1 bis 10,
**dadurch gekennzeichnet, dass** jede Boden- und Anbindungsbemessungshülle durch Oberflächen verbundene Bemessungspunkte umfasst, wobei ein Bodenkraftpunkt (PSOL) oder ein Anbindungskraftpunkt (PATT), der sich außerhalb einer entsprechenden Bemessungshülle (200, 300) befindet, ein kritischer Punkt (PCRIT) ist, wobei jeder Bemessungspunkt (202, 302) mindestens einer Landegestellkomponente (10) zugeordnet ist, und dass nach dem Bestimmen, dass eine harte Landung vorliegt, das Hartlandungserkennungsverfahren für jeden kritischen Punkt umfasst: (i) Bestimmen (STP6.1) eines Vektors (VECT), der den kritischen Punkt und einen Ursprung (CTR) des zugehörigen Boden- oder Anbindungsdiagramms verbindet, (ii) Bestimmen (STP6.2) einer besagten Oberfläche (400) der entsprechenden Bemessungshülle (200, 300), die vom Vektor (VECT) gekreuzt wird, (iii) Anzeigen (STP6.3) einer Warnung, die signalisiert, dass jede Komponente, die einem Bemessungspunkt zugeordnet ist, der einen Scheitelpunkt der vom Vektor (VECT) gekreuzten Fläche (400) bildet, ein zu inspizierendes mechanisches Teil ist.

12. Hartlandungserkennungsverfahren nach einem der Ansprüche 1 bis 11,
**dadurch gekennzeichnet, dass** jede Boden- und Anbindungsbemessungshülle Bemessungspunkte umfasst, die durch Flächen verbunden sind, wobei ein Bodenkraftpunkt (PSOL) oder ein Anbindungskraftpunkt (PATT) in einem vorgegebenen Abstand (DIS) von der entsprechenden Bemessungshülle (200), 300) ein Grenzpunkt ist, wenn der Bodenkraftpunkt (PSOL) in der Bodenbemessungshülle (200) liegt und alle Anbindungskraftpunkte (PATT) in der entsprechenden Anbindungsbemessungshülle (300), für jeden Grenzpunkt (PMARG): (i) Bestimmen (STP7.1) einer Halbgeraden (405), die von einem Ursprung (CTR) des zugehörigen Boden- oder Anbindungsdiagramms ausgeht und durch den Randpunkt (PMARG) verläuft, (ii) Bestimmen (STP7.2) einer besagten von der Halbgeraden (405) gekreuzten Fläche, (iii) Anzeigen (STP7.3) einer Warnung, die darauf hinweist, dass jede Komponente, die einem Bemessungspunkt (404) zugeordnet ist, der einen Scheitelpunkt der von der Halbgeraden durchquerten Fläche (400) bildet, ein zu inspizierendes mechanisches Teil ist.

13. Hartlandungserkennungssystem (50) zur Erkennung des Auftretens einer harten Landung während einer Landephase eines Luftfahrzeugs (1), wobei das Luftfahrzeug (1) ein Landegestell (10) mit einem Kontaktelement (11), das bei einer Landung mit dem Boden (100) in Kontakt kommt, und mindestens zwei Anbindungselementen (30) umfasst, die mit einer Struktur (4) des Luftfahrzeugs (1) verbunden sind, wobei das Landegestell (10) einen Dämpfer (15) umfasst, der mindestens ein Fluid (16) enthält,
wobei das Hartlandungserkennungssystem (50) konfiguriert ist, um das Verfahren nach einem der Ansprüche 1 bis 12 anzuwenden, und umfasst:
- einen Temperatursensor (60), einen Drucksensor (55) für einen Dämpferdruck des Fluids (16), einen Betriebsdatensensor (65),
- einen Controller (80), der konfiguriert ist, um (STP1) drei Bodenkomponenten (FSX, FSY, FSZ) einer Bodenreaktionskraft an einer Grenzfläche zwischen dem Boden (100) und dem Kontaktelement (11) entlang von je drei verschiedenen und nicht koplanaren (1) Referenzachsen (AX, AY, AZ) und für jede Anbindung (30) drei Anbindungskomponenten (FAX, FAY, FAY) einer auf diese Anbindung (30) jeweils entlang der drei Referenzachsen (AX, AY, AZ) ausgeübten Kraft zu bestimmen (STP2),
- wobei der Controller (80) konfiguriert ist, um zu bestimmen (STP3), dass ein durch die drei Bodenkomponenten (FSX, FSY, FSZ) definierter Bodenkraftpunkt (PSOL) in einem dreidimensionalen Bodendiagramm (201) innerhalb oder außerhalb eines durch eine Bodenbemessungshülle (200) begrenzten Bodenkraftvolumens liegt, und für jede Anbindung (30), dass ein durch die drei entsprechenden Anbindungskomponenten (FAX, FAY, FAY) definierter Anbindungskraftpunkt (PATT) in einem eigenen dreidimensionalen Anbindungsdiagramm (301) innerhalb oder außerhalb eines durch eine Anbindungsbemessungshülle (300) begrenzten Anbindungsvolumens liegt,
- wobei der Controller (80) konfiguriert ist, um zu bestimmen, dass eine harte Landung vorliegt (STP4), wenn mindestens der Bodenkraftpunkt (PSOL) außerhalb der Bodenbemessungshülle (200) liegt oder mindestens ein Anbindungskraftpunkt (PATT) außerhalb der entsprechenden Anbindungsbemessungshülle (300) liegt.

14. Anordnung mit einem Luftfahrzeug (1), das mit einem Landegestell (10) ausgestattet ist, das ein Kontaktelement (11) umfasst, das bei einer Landung mit dem Boden in Kontakt kommt, mindestens zwei Anbindungen (30), die mit einer Struktur (4) des Luftfahrzeugs (1) verbunden sind, und einem Dämpfer (15), der mindestens ein Fluid (16) enthält,
**dadurch gekennzeichnet, dass** die Anordnung mit einem Hartlandungserkennungssystem (50) nach Anspruch 13 versehen ist, wobei das Hartlandungserkennungssystem (50) zumindest teilweise in dem Luftfahrzeug (1) angeordnet ist.

## Claims

1. Method for detecting a hard landing in order to detect if a hard landing has occurred during a landing phase (PHASATT) carried out by an aircraft (1), the aircraft (1) being provided with at least one landing gear (10) comprising a contact member (11) coming into contact with the ground (100) during a landing manoeuvre and at least two connectors (30) connected to a structure (4) of the aircraft (1), said landing gear (10) comprising at least one shock absorber (15) containing at least one fluid (16),
**characterised in that** the method for detecting a hard landing comprises carrying out a series of successive monitoring cycles (PCY), each monitoring cycle (PCY) comprising the following steps:
- determining (STP1), using a controller (80), three ground components (FSX, FSY, FSZ) of a ground reaction force at an interface between the ground (100) and the contact member (11) and along three separate and non-coplanar (1) reference axes (AX, AY, AZ) respectively, and determining (STP2), for each connector (30), three attachment components (FAX, FAY, FAY) of a force applied to this connector (30) along said three reference axes (AX, AY, AZ) respectively,
- determining (STP3), using the controller (80), whether a ground stress point (PSOL) defined by the three ground components (FSX, FSY, FSZ) lies within or outside a ground volume delimited by a ground dimensioning envelope (200) in a three-dimensional ground diagram (201), and, for each connector (30), whether an attachment stress point (PATT) defined by the three corresponding attachment components (FAX, FAY, FAY) lies within or outside an attachment volume delimited by an attachment dimensioning envelope (300) in a three-dimensional attachment diagram (301) specific to it,
- and determining (STP4) that a hard landing has occurred when at least the ground stress point (PSOL) lies outside the ground dimensioning envelope (200) or at least one attachment stress point (PATT) lies outside the corresponding attachment dimensioning envelope (300).

2. Method for detecting a hard landing according to claim 1,
**characterised in that** the method for detecting a hard landing comprises determining (STP3.1), using the controller, whether the ground stress point (PSOL) has as coordinates the three ground components (FSX, FSY, FSZ) in the three-dimensional ground diagram (201) and, for each connector, determining (STP3.2), using the controller (80), whether the associated attachment stress point (PATT) has as coordinates the three associated attachment components (FAX, FAY, FAZ) in the three-dimensional (301) attachment diagram (301) specific to the connector (30) in question.

3. Method for detecting a hard landing according to any one of claims 1 to 2,
**characterised in that** the method for detecting a hard landing comprises generating (HL) a maintenance alert with an alerter (85) when it is determined that a hard landing has occurred or generating (NHL) a normality alert with the alerter when no ground stress point (PSOL) lies outside the ground dimensioning envelope (200) and no attachment stress point (PATT) lies outside the corresponding attachment dimensioning envelope (300).

4. Method for detecting a hard landing according to any one of claims 1 to 3,
**characterised in that** said three reference axes are a roll axis (AX) of the aircraft (1), a pitch axis (AY) of the aircraft (1) and a yaw axis (AZ) of the aircraft (1).

5. Method for detecting a hard landing according to any one of claims 1 to 4,
**characterised in that** said method for detecting a hard landing comprises successive measurements, during flight and with a pressure sensing device (55), of a shock absorption pressure (P) of said fluid (16), said controller (80) being configured to consider that said landing phase (PHASATT) begins when a relative difference between two successive measurements of said shock absorption pressure (P) exceeds a trigger threshold.

6. Method for detecting a hard landing according to any one of claims 1 to 5,
**characterised in that** said method for detecting a hard landing comprises measuring, with a pressure sensing device, a shock absorption pressure (P) of said fluid (16) during the landing phase (PHASATT), said controller (80) being configured to consider that said landing phase (PHASATT) has ended when:
- each landing gear of said at least one landing gear is resting on the ground, and
- said shock absorption pressure for each landing gear of said at least one landing gear is greater than a stored or calculated test threshold for the duration of a reference period.

7. Method for detecting a hard landing according to any one of claims 1 to 6,
**characterised in that** said ground dimensioning envelope (200) comprises ground dimensioning points (202) and each attachment dimensioning envelope (300) comprises attachment dimensioning points (302), each ground dimensioning point (202) representing a maximum force experienced at an interface between the contact member (11) and the ground (100) during a limit landing scenario, and, for each connector, each attachment dimensioning point (302) representing a maximum force experienced by the connector (30) in question during the limit landing scenario.

8. Method for detecting a hard landing according to any one of claims 1 to 7,
**characterised in that** said determining (STP1, STP2), using a controller (80), of three ground components (FSX, FSY, FSZ) and three attachment components (FSX, FSY, FSZ) for each connector (30) comprises the following steps:
- during the current monitoring cycle, measuring (STPM1), using a pressure sensing device (55), a shock absorption pressure (P) of said fluid (16),
- during or outside the landing phase, measuring (STPM2), using a temperature sensing device (60), a temperature (T) inside or outside said shock absorber (15),
- during the current monitoring cycle, measuring (STPM3), using an operating data sensing device (65), one or more items of operating data (DI) of said aircraft (1),
- using the controller (80), determining (STPINT), from a stress model (M) taking into account said temperature (T) and said shock absorption pressure (P) and the item or items of operating data (DI), the three ground components (FSX, FSY, FSZ) and the three attachment components (FAX, FAY, FAZ) for each connector.

9. Method for detecting a hard landing according to claim 8,
**characterised in that** the item or items of operating data (DI) is or are included in an extended list comprising: a roll angle of the aircraft (1), a pitch angle of the aircraft (1), a yaw angle of the aircraft (1), an angular roll speed of the aircraft (1), an angular pitch speed of the aircraft (1), an angular yaw speed of the aircraft (1), a longitudinal acceleration along a roll axis of the aircraft (1) a lateral acceleration along a pitch axis of the aircraft (1), a vertical acceleration along a yaw axis of the aircraft (1), a mass of the aircraft (1), a lift of the aircraft (1), a position of a collective pitch control of a rotor (3) of the aircraft (1), a position of a cyclic pitch control of a rotor (3) of the aircraft (1), a position of the centre of gravity of the aircraft (1), an inflation pressure of a tyre of said landing gear (10), a position of a component of said landing gear (10), a collective pitch angle of blades of a rotor (3) of the aircraft (1), a swashplate angle of a rotor (3) of the aircraft (1).

10. Method for detecting a hard landing according to any one of claims 8 to 9,
**characterised in that** said determining (STPINT), from a stress model (M), of the three ground components (FSX, FSY, FSZ) and the three attachment components (FAX, FAY, FAZ) for each connector comprises: (a) determining (STPINT1), with a movement module (M1) of the stress model (M) applied by the controller (80), a length (CRSE) of said shock absorber (15) based on said shock absorption pressure (P) and said temperature (T), (b) determining (STPINT2), with a stress module (M2) of the stress model (M), the ground components (FSX, FSY, FSZ) based on said length (CRSE) and said shock absorption pressure (P) and at least one said item of operating data (DI), and (c) determining (STPINT3), with a transformation module (M3) of the stress model (M), the attachment components (FAX, FAY, FAZ) based on the ground components (FSX, FSY, FSZ).

11. Method for detecting a hard landing according to any one of claims 1 to 10,
**characterised in that**, each ground and attachment dimensioning envelope comprising dimensioning points that are connected by surfaces, a ground stress point (PSOL) or an attachment stress point (PATT) situated outside a corresponding dimensioning envelope (200, 300) being a critical point (PCRIT), each dimensioning point (202, 302) being associated with at least one component of the landing gear (10), when it is determined that a hard landing has occurred, said method for detecting a hard landing comprises, for each critical point: (i) determining (STP6.1) a vector (VECT) linking the critical point and an origin (CTR) of the associated ground or attachment diagram, (ii) determining (STP6.2) a surface (400) of said corresponding dimensioning envelope (200, 300) traversed by the vector (VECT), and (iii) displaying an alert (STP6.3) indicating that each component associated with a dimensioning point forming a vertex of the surface (400) traversed by the vector (VECT) is a mechanical part to be inspected.

12. Method for detecting a hard landing according to any one of claims 1 to 11,
**characterised in that**, each ground and attachment dimensioning envelope comprising dimensioning points that are connected by surfaces, a ground stress point (PSOL) or an attachment stress point (PATT) situated at a predetermined distance (DIS) from the corresponding dimensioning envelope (200, 300) being a point at the margin, when the ground stress point (PSOL) is within the ground dimensioning envelope (200) and all the attachment stress points (PATT) are within the corresponding attachment dimensioning envelope (300), for each point at the margin (PMARG): (i) determining (STP7.1) a ray (405) starting from an origin (CTR) of the associated ground or attachment diagram and passing through the point at the margin (PMARG), (ii) determining (STP7.2) the surface traversed by the ray (405), and (iii) displaying (STP7.3) an alert indicating that each component associated with a dimensioning point (404) forming a vertex of the surface (400) traversed by the ray is a mechanical part to be inspected.

13. System (50) for detecting a hard landing in order to detect if a hard landing has occurred during a landing phase carried out by an aircraft (1), the aircraft (1) being provided with a landing gear (10) comprising a contact member (11) coming into contact with the ground (100) during a landing manoeuvre and at least two connectors (30) connected to a structure (4) of the aircraft (1), said landing gear (10) comprising a shock absorber (15) containing at least one fluid (16),
**characterised in that** the system (50) for detecting a hard landing is configured to apply the method according to any one of claims 1 to 12 and comprises:
- a temperature sensing device (60), a pressure sensing device (55) for detecting a shock absorption pressure of said fluid (16), and an operating data sensing device (65),
- a controller (80) configured to determine (STP1) three ground components (FSX, FSY, FSZ) of a ground reaction force at an interface between the ground (100) and the contact member (11) and along three separate and non-coplanar (1) reference axes (AX, AY, AZ) respectively, and to determine (STP2), for each connector (30), three attachment components (FAX, FAY, FAY) of a force applied to this connector (30) along said three reference axes (AX, AY, AZ) respectively,
- the controller (80) being configured to determine (STP3) whether a ground stress point (PSOL) defined by the three ground components (FSX, FSY, FSZ) lies within or outside a ground volume delimited by a ground dimensioning envelope (200) in a three-dimensional ground diagram (201), and, for each connector (30), whether an attachment stress point (PATT) defined by the three corresponding attachment components (FAX, FAY, FAY) lies within or outside an attachment volume delimited by an attachment dimensioning envelope (300) in a three-dimensional attachment diagram (301) specific to it,
- and the controller (80) being configured to determine (STP4) that a hard landing has occurred when at least the ground stress point (PSOL) lies outside the ground dimensioning envelope (200) or at least one attachment stress point (PATT) lies outside the corresponding attachment dimensioning envelope (300).

14. Assembly having an aircraft (1) provided with a landing gear (10) comprising a contact member (11) coming into contact with the ground during a landing manoeuvre, at least two connectors (30) connected to a structure (4) of the aircraft (1), and a shock absorber (15) containing at least one fluid (16),
**characterised in that** said assembly is provided with a system (50) for detecting a hard landing according to claim 13, said system (50) for detecting a hard landing being arranged at least partially inside said aircraft (1).
